# EUROPÄISCHE PATENTSCHRIFT

(11) **EP 3 823 917 B1**
(45) Veröffentlichungstag und Bekanntmachung des Hinweises auf die Patenterteilung: **31.08.2022**
(21) Anmeldenummer: 19742014.4
(22) Anmeldetag: 15.07.2019
(51) Int. Cl.: B65G 21/20, B65G 47/84

(54) **TRANSPORTVORRICHTUNG MIT DREHZYLINDER UND KLEMMRIEMEN**
TRANSPORT APPARATUS HAVING ROTARY CYLINDER AND CLAMPING BELT
DISPOSITIF DE TRANSPORT À CYLINDRE ROTATIF ET À COURROIE DE SERRAGE

(30) Priorität: 17.07.2018 DE 102018005609
(43) Veröffentlichungstag der Anmeldung: 26.05.2021
(73) Patentinhaber: Heuft Systemtechnik GmbH, 56659 Burgbrohl (DE)
(72) Erfinder: HEUFT, Bernhard, 56659 Burgbrohl (DE); KASDORF, Olga, 34414 Warburg (DE)
(74) Vertreter: Gritschneder, Sebastian
(86) Internationale Anmeldenummer: PCT/EP2019/069034
(87) Internationale Veröffentlichungsnummer: WO 2020/016187

(56) Entgegenhaltungen:
- DE-A1-102016 103 845
- DE-U1- 29 716 795
- FR-A- 1 171 558
- JP-A- S6 169 617
- US-A1- 2011 108 389

## Beschreibung

Die Erfindung betrifft eine Transportvorrichtung zum Transport von Behältern. Die Transportvorrichtung umfasst einen ersten Transportabschnitt, der ausgebildet ist die Behälter anzufördern und einen zweiten Transportabschnitt, der ausgebildet ist die Behälter abzufördern. Die Transportvorrichtung umfasst ferner eine Überführeinrichtung mit der die Behälter von dem ersten Transportabschnitt auf den zweiten Transportabschnitt befördert werden.

Es ist bekannt, in einer Behälterinspektionseinrichtung ein Paar von Klemmriemen gegenüberliegend anzuordnen und Behälter zwischen den Klemmriemen zu fördern. Einen derartigen Riemenantrieb offenbart beispielsweise die DE 297 16 795 U1. Dieser Riemenantrieb kann verwendet werden, um eine Druck- bzw. Dichtigkeitsprüfung von Behältern durchzuführen. Zu diesem Zweck werden die Behälter auf einem Transportband geführt und durch die seitlich verlaufenden Riemen unter Druck gesetzt. DE 10 2016 103845 A1 offenbart weiterhin eine Vorrichtung und ein Verfahren gemäß dem Oberbegriff der Ansprüche 1 und 11.

Ebenso kann ein Riemenantrieb zum Einsatz kommen, um Behälter von oben und unten inspizieren zu können. In diesem Fall wird der Behälter durch den Riemenantrieb von einem ersten Transportabschnitt auf einen zweiten Transportabschnitt überführt. Zwischen den beiden Transportabschnitten wird der Behälter lediglich durch Reibung gehalten, die von der Kraft der Riemen auf den Behälter erzeugt wird. Der Behälter kann dann von oben und insbesondere von unten inspiziert werden.

Bei derartigen Riemenantrieben werden die Riemen über Schleifleisten geführt, mit denen der benötigte Anpressdruck an die Behälter erzeugt wird. Diese Vorrichtungen haben jedoch den Nachteil, dass es dabei zu relativ starker Reibung zwischen der Rückseite der Antriebsriemen und den Schleifleisten kommt, was sich negativ auf die Lebensdauer der Antriebsriemen auswirkt.

Weiterhin ist bekannt, zur Richtungsänderung bei Transportstrecken ein Sternrad vorzusehen. Ein Sternrad weist den Nachteil auf, dass das Sternrad nicht mit variabler Geschwindigkeit betrieben werden kann, sondern die Geschwindigkeit des Sternrads mit der Fördergeschwindigkeit der Behälter übereinstimmen muss. Außerdem kann ein Sternrad nicht variabel für verschiedene Flaschengrößen verwendet werden. Zur Anpassung werden daher derzeit Formatteile eingesetzt, mit denen die Aufnahmen eines Sternrades an die unterschiedlichen Flaschengrößen angepasst werden. Bei einem Wechsel der zu befördernden Behälter müssen die Formatteile manuell ausgewechselt werden. Dadurch ist ein Wechsel des Behälterformats immer auch mit relativ aufwändigen Umbaumaßnahmen verbunden.

Der vorliegenden Erfindung liegt daher die Aufgabe zugrunde, eine Transportvorrichtung der eingangs genannten Art derart weiterzubilden, dass auf optimierte Weise eine Richtungsänderung der transportierten Behälter vorgenommen werden kann und zeitgleich eine Behälterinspektion, insbesondere eine Bodeninspektion, durchgeführt werden kann. Eine weitere Aufgabe der Erfindung besteht darin, eine solche Transportvorrichtung bereitzustellen, die eine erhöhte Lebensdauer gegenüber herkömmlichen Transportvorrichtungen aufweist. Eine weitere Aufgabe der Erfindung besteht auch darin, eine Transportvorrichtung bereitzustellen, die möglichst einfach an unterschiedliche Behältergrößen angepasst werden kann. Überraschenderweise hat sich sogar herausgestellt, dass die vorliegende Erfindung nicht nur für Behälter mit rundem Querschnitt, sondern auch für Behälter mit eckigem, oder elliptischem Querschnitt eingesetzt werden kann. Aufgrund der Elastizität des Klemmriemens und der Flexibilität des Transportsystems können sogar unterschiedlich geformte oder unterschiedlich große Behälter gleichzeitig auf der erfindungsgemäßen Transportvorrichtung befördert werden.

Eine weitere Aufgabe der Erfindung besteht darin, eine Transportvorrichtung der oben genannten Art bereitzustellen, bei der Behälter in unregelmäßigen Abständen transportiert werden können, und insbesondere die Befüllung und Entleerung reibungsverlustarm durchgeführt werden können.

Erfindungsgemäß wird eine Transportvorrichtung zum Transport von Behältern vorgeschlagen. Die Transportvorrichtung umfasst einen ersten Transportabschnitt, der ausgebildet ist die Behälter anzufördern und einen zweiten Transportabschnitt, der ausgebildet ist die Behälter abzufördern. Die Transportvorrichtung umfasst ferner eine Überführeinrichtung. Die Überführeinrichtung umfasst einen Drehzylinder, einen Klemmriemen, und eine Ausgleichseinrichtung. Der Drehzylinder und/oder der Klemmriemen sind antreibbar ausgebildet. Die Ausgleichseinrichtung ist dabei so ausgebildet ist, dass damit die Länge des Klemmriemens im Bereich der Überführeinrichtung eingestellt werden kann. Der Drehzylinder und der Klemmriemen sind ausgebildet die Behälter zwischen dem Drehzylinder und dem Klemmriemen zu halten und dabei von der ersten Transportstrecke auf die zweite Transportstrecke zu überführen. Der Drehzylinder weist einen oder mehrere Behälterstützringe und mindestens ein Riemenstützelement auf. Das Riemenstützelement ist so angeordnet, dass der Klemmriemen daran anliegt, wenn sich keine Behälter auf der Überführeinrichtung befinden.

Durch den Drehzylinder werden die Behälter zwischen dem ersten Transportabschnitt und dem zweiten Transportabschnitt auf einer Überführeinrichtung mit gekrümmter Transportstrecke transportiert. Auf der gekrümmten Transportstrecke werden die Behälter zwischen dem Klemmriemen und dem Drehzylinder eingeklemmt. Dadurch dass die Behälter zwischen dem Klemmriemen und dem Drehzylinder eingeklemmt sind, müssen die Behälter nicht auf einem Transportband stehend gefördert werden oder anderweitig gehalten werden. Die eingeklemmten Behälter werden frei schwebend durch die gekrümmte Transportstrecke geführt.

Vorzugsweise sind der erste Transportabschnitt und der zweite Transportabschnitt unter einem Winkel zueinander angeordnet. Die Überführeinrichtung ist dabei dazu ausgebildet den Behältern die notwendige Richtungsänderung zu erteilen, um diese von dem ersten auf den zweiten Transportabschnitt zu überführen.

Durch die Transportvorrichtung kann eine Behälterinspektion realisiert werden. Die Behälterinspektion wird vorzugsweise im Bereich der gekrümmten Transportstrecke, also in dem Bereich in dem die Behälter zwischen dem Klemmriemen und dem Drehzylinder eingeklemmt sind, durchgeführt. Bei der Behälterinspektion handelt es sich beispielsweise um eine Bodeninspektion, eine Leerflascheninspektion, eine Druck- bzw. Dichtigkeitsprüfung, eine Füllstandskontrolle, eine Verschlusskontrolle oder eine Etikettensitzkontrolle. Behälter können kontinuierlich und mit variabler Geschwindigkeit durch die erfindungsgemäße Transportvorrichtung transportiert werden.

Insbesondere können mit der vorliegenden Erfindung die Behälter in loser Reihenfolge und/oder mit unterschiedlichen Abständen untereinander transportiert werden. Es ist damit nicht notwendig, die Behälter auf einen vorher festgelegten Abstand zueinander zu bringen, wie das noch bei herkömmlichen Sternrädern notwendig ist.

Neben einer Behälterinspektion kann durch die gekrümmte Transportstrecke gleichzeitig eine Richtungsänderung realisiert werden. Bei der Richtungsänderung handelt es sich vorzugsweise um eine Richtungsänderung von 90°. Allerdings ist auch denkbar eine kleinere oder größere Richtungsänderung durchzuführen. Beispielsweise kann eine Richtungsänderung um 180° durchgeführt werden, sodass Behälter nach dem Durchlaufen der erfindungsgemäßen Transportvorrichtung entgegengesetzt der anfänglichen Eingangsrichtung abtransportiert werden. Eine größere Richtungsänderung führt zu einer längeren gekrümmten Transportstrecke, welche wiederum die Strecke verlängert, auf der eine Behälterinspektion durchgeführt werden kann.

Die vorliegende Erfindung kann auch im Zusammenhang mit einem komplexeren System von mehreren Inspektionseinrichtungen eingesetzt werden. Bei einer Seitenwandinspektion ist es nämlich oftmals notwendig die Flaschen aus unterschiedlichen Richtungen zu inspizieren. Unter Verwendung der vorliegenden Erfindung kann zum Beispiel eine erste Seitenwandinspektion im Bereich des ersten Transportabschnitts, auf dem die Behälter angefördert werden, und eine zweite Seitenwandinspektion im Bereich des zweiten Transportabschnitts, auf dem die Behälter abgefördert werden, durchgeführt werden. Während dem dazwischenliegenden Transport auf der Überführeinrichtung wird der Behälter dann einerseits um einen vorbestimmten Winkel z.B. 90° gedreht und andererseits kann währenddessen eine Bodeninspektion vorgenommen werden. Zusätzlich dazu können dann noch weitere Inspektionen wie Mündungsinspektion, oder Restlaugenerkennung unternommen werden. Durch die gekrümmte Transportstrecke der Transportvorrichtung der vorliegenden Erfindung kann von dem konventionell üblichen linearen Aufbau solcher Inspektionssysteme abgewichen werden, wodurch die benötigte Baulänge von Inspektionssystemen reduziert wird. Ganz allgemein wird dadurch auch eine flexiblere Gestaltung und gegebenenfalls ein kompakterer Aufbau von Inspektionssystemen ermöglicht.

Wie bereits oben erwähnt kann die Richtungsänderung und damit die Verweilzeit der Behälter an die jeweilige Transportaufgabe angepasst werden. Die verlängerte Verweilzeit in der erfindungsgemäßen Transportvorrichtung kann dabei auch vorteilhaft bei der Dichtigkeitsprüfung von verformbaren, befüllten Behältern, wie zum Beispiel befüllten Kunststoffflaschen oder Metalldosen, eingesetzt werden, bei der durch seitliches Pressen der Behälterinnendruck erhöht wird und wobei anhand des sich aufbauenden Gegendrucks der Behälterzustand bestimmt wird. Je länger der Anpressdruck auf die Behälter ausgeübt wird, desto länger ist die Zeit über die sich der Behälterinnendruck aufbauen kann und desto präziser kann die Dichtigkeitsprüfung durchgeführt werden. Die Verweilzeit der Behälter in der Überführeinrichtung hängt dabei auch vom Umschlingungswinkel des Klemmriemens ab. Der Umschlingungswinkel kann grundsätzlich beliebig gewählt werden und kann vorzugsweise 90, 180 oder bis zu 330° des Umfangs des Drehzylinders betragen.

Je größer der Umschlingungswinkel des Klemmriemens, desto größer wird die Gefahr, dass der Klemmriemen bei zu geringer Befüllung der Überführeinrichtung mit dem Drehzylinder in Berührung kommt und sich unerwünschte Reibungsverluste einstellen. Um solche Reibungsverluste zu vermeiden, ist der Drehzylinder erfindungsgemäß miteinem oder mehreren Behälterstützringen und mindestens einem Riemenstützelement ausgestattet. Das Riemenstützelement ist dabei so angeordnet ist, dass der Klemmriemen daran anliegt, wenn sich keine oder zu wenige Behälter auf der Überführeinrichtung befinden.

Der Drehzylinder kann mindestens einen Behälterstützring und ein Riemenstützelement in Form eines Riemenstützrings aufweisen. Vorzugsweise kann der Drehzylinder einen oberen Behälterstützring und einen unteren Behälterstützring aufweisen, wobei zwischen den Behälterstützringen ein zurückgesetzter und gegebenenfalls frei drehbarer Riemenstützring angeordnet ist, und wobei die Breite des Klemmriemens kleiner ist als der Abstand der Behälterstützringe. Die Anordnung und die Anzahl der Behälterstützring und der Riemenstützringe, kann dabei an die Form und die Anzahl der verwendeten Klemmriemen angepasst werden. Weitere vorzugsweise Ausführungsformen des Drehzylinders betreffen zum Beispiel einen zentralen Behälterstützring der zwischen zwei Riemenstützringen angeordnet ist oder einen Drehzylinder, der mehrere abwechselnd angeordnete Behälter- und Riemenstützringe aufweist.

Auf diese Weise wird eine Beschädigung der Transportvorrichtung vermieden. Falls keine Behälter durch die Transportvorrichtung transportiert werden, besteht ansonsten die Gefahr, dass der Klemmriemen auf dem äußeren Umfang des Drehzylinders anliegt. Falls darüber hinaus sowohl der Klemmriemen als auch der Drehzylinder aktiv angetrieben werden, könnte die Situation entstehen, dass zwischen dem Klemmriemen und dem Drehzylinder ungewollte Reibung auftritt. Durch den zurückgesetzten Riemenstützring kann dies verhindert werden.

Wenn Behälter durch die Transportvorrichtung transportiert werden, kontaktieren diese Behälter lediglich den mindestens einen Behälterstützring des Drehzylinders sowie den Klemmriemen. In diesem Fall liegt der Klemmriemen an den transportierten Behältern an und eine Kontaktierung des Drehzylinders durch den Klemmriemen wird durch die dazwischenliegenden Behälter verhindert. Werden keine Behälter von der Transportvorrichtung transportiert, kontaktiert der Klemmriemen den Drehzylinder. Ungewollte Reibung kann dabei aber dadurch verhindert werden, dass der Klemmriemen lediglich den zwischen dem oberen und unteren Behälterstützring angeordneten Riemenstützring kontaktiert. Der Klemmriemen weist hierzu eine Breite auf, die kleiner ist als der Abstand zwischen dem oberen und unteren Behälterstützring.

Vorzugsweise sind der obere Behälterstützring und der untere Behälterstützring antreibbar gelagert, wobei der Riemenstützring frei drehbar gelagert ist. Der Riemenstützring muss mindestens so weit zurückgesetzt sein, dass zu transportierende Behälter im normalen Betrieb nicht mit dem Riemenstützring in Kontakt kommen. Gleichzeitig sollte der Durchmesser des Riemenstützrings aber auch nicht zu klein gewählt werden, da sonst die benötigte Länge des Vorlaufstrangs des Klemmriemens zwischen einer leeren und einer befüllten Überführeinrichtung zu stark variiert und dies die Regelung der Klemmriemenlänge erschwert.

Auf diese Weise können Behälter, welche durch die Transportvorrichtung transportiert werden, durch die antreibbaren Behälterstützringe angetrieben werden. Gleichzeitig wird unerwünschte Reibung oder gar eine Beschädigung der Transportvorrichtung verhindert, falls keine Behälter durch die Transportvorrichtung transportiert werden. In diesem Fall kontaktiert der Klemmriemen nur den Riemenstützring des Drehzylinders. Dadurch, dass der Riemenstützring frei drehbar gelagert ist, kann sich der Riemenstützring mit der Antriebsgeschwindigkeit des Klemmriemens mitbewegen.

In einer weiteren Ausführungsform kann der Drehzylinder mindestens einen Behälterstützring und ein Riemenstützelement in Form mindestens einer ausfahrbaren Stützeinrichtung aufweisen. Vorzugsweise kann der Drehzylinder einen oberen Behälterstützring und einen unteren Behälterstützring aufweisen, wobei die mindestens eine ausfahrbare Stützeinrichtung zwischen den Behälterstützringen angeordnet ist, und wobei die Breite des Klemmriemens kleiner ist als der Abstand der Behälterstützringe. Wie oben im Zusammenhang mit den Riemenstützringen beschrieben, kann der Drehzylinder auch ausfahrbare Stützeinrichtungen an unterschiedlichen vertikalen Positionen zwischen den verschiedenen Behälterstützringen aufweisen.

Die mindestens eine ausfahrbare Stützeinrichtung umfasst eine Stützrolle, auf der der Klemmriemen abrollen kann sowie ein Stellelement, mit dem die Stützrolle radial positioniert werden kann. Wenn sich keine Behälter auf der Überführeinrichtung befinden, ist das Stellelement über den Umfang der Behälterstützringe ausgefahren, so dass der Klemmriemen über die Stützrolle geführt wird und keinen Kontakt mit den Behälterstützringen hat. Sobald sich Behälter auf der Überführeinrichtung befinden und daher nicht mehr die Gefahr besteht, dass der Klemmriemen auf den Behälterstützringen zur Auflage kommt, wird die Stützrolle zurückgezogen.

Je nach Umschlingungswinkel können ein oder mehrere Stützeinrichtungen vorgesehen sein, die vorzugsweise gleichmäßig über die Länge der Überführeinrichtung verteilt angeordnet sind. Die Stützeinrichtungen können ortsfest gegenüber dem Drehzylinder angeordnet sein. Die Stützrollen können aber auch so angeordnet sein, dass sie sich mit dem Drehzylinder mitdrehen.

Vorzugsweise sind die Stellelemente der Stützeinrichtungen motorische, pneumatische oder hydraulische Stellelemente, mit denen die Stützrollen in radialer Richtung bezüglich des Drehzylinders verfahren werden können. Insbesondere können hierfür elektromotorische Linearantriebe eingesetzt werden.

Die Ausführungsform mit radial verstellbaren Stützeinrichtungen ist besonders flexibel an die jeweilige Transportaufgabe anpassbar. Insbesondere beim Einlauf der ersten Behälter auf die Überführeinrichtung, kann durch die radiale Position der ersten Stützrolle der Winkel zwischen dem Klemmriemen und dem Drehzylinder so eingestellt werden, dass die ersten Behälter optimal auf die Überführeinrichtung geleitet werden. Dasselbe gilt auch für den Auslauf der letzten Behälter aus der Überführeinrichtung. Darüber hinaus ist bei dieser Ausführungsform die Länge des Vorlaufstrangs des Klemmriemens bei einer leeren Überführeinrichtung in etwa so groß wie bei einer gefüllten Überführeinrichtung. Dies erleichtert insbesondere beim Anfahren bzw. Befüllen der Überführeinrichtung die Einstellung der Riemenspannung bzw. der benötigten Länge des Vorlaufstrangs des Klemmriemens, da es hier lediglich kleiner Kraftsprünge bzw. kleiner Längenänderungen bedarf.

Aber auch bei unregelmäßigen Abständen zwischen den zu befördernden Behältern kann mithilfe der Stützeinrichtung ein Kontaktieren des Klemmriemens mit dem Drehzylinder verhindert werden. Wenn größere Lücken zwischen den Behältern detektiert werden, können die Stützeinrichtungen kurzzeitig ausgefahren werden, so dass der Klemmriemen nicht den Drehzylinder berührt. Auch dadurch kann die Gefahr einer Riemenabnutzung wegen unnötiger Reibung zwischen dem Klemmriemen und dem Drehzylinder reduziert werden.

Es kann ein einziger oder auch mehrere parallel und übereinander angeordnete Klemmriemen zum Einsatz kommen. Mit mehreren zum Beispiel zwei oder drei parallel angeordneten Klemmriemen können die Behälter gegebenenfalls stabiler transportiert werden. Bei einer Verwendung von zwei oder mehr Klemmriemen können natürlich entsprechend mehrere Riemenstützringe und mehrere Behälterstützringe verwendet werden.

Es ist auch möglich, dass mehrere Klemmriemen hintereinander angeordnet sind, wobei zum Beispiel ein erster Klemmriemen in einem ersten Umfangsbereich der Überführeinrichtung vorgesehen ist und wobei ein zweiter Klemmriemen in einem zweiten Umfangsbereich der Überführeinrichtung vorgesehen ist. Insbesondere wenn die Überführeinrichtung einen Umschlingungswinkel von 180° oder mehr des Umfangs des Drehzylinders beschreibt, kann es sinnvoll sein zur Vermeidung von Reibung oder zur Verteilung des Anpressdrucks mehrere hintereinander angeordnete Klemmriemen zu verwenden.

In Transportrichtung hintereinander angeordnete Klemmriemen können mit der gleichen Geschwindigkeit betrieben werden, um einen kontinuierlichen und gleichmäßigen Transport der Behälter zu gewährleisten. Es ist aber auch möglich, hintereinander angeordnete Klemmriemen mit unterschiedlichen Geschwindigkeiten zu betreiben. Da sich der Drehzylinder immer mit derselben Geschwindigkeit bewegt, führt ein Geschwindigkeitsunterschied zwischen den Klemmriemen dazu, dass die Behälter in den jeweiligen Transportabschnitten unterschiedlich stark rotiert werden. Dies kann zum Beispiel bei der Fremdkörperkontrolle ausgenutzt werden, um zwischen Defekten an der Behälterwand und Fremdkörpern im Behälterinneren zu differenzieren.

Der Klemmriemen kann aus einem beliebigen geeigneten Werkstoff hergestellt sein. Vorzugsweise kann der Klemmriemen ein Kunststoff- oder Gummiprodukt sein. Vorzugsweise kann der Klemmriemen aus Polyurethan Elastomer bestehen und/oder ein Polyamidgewebe aufweisen. Die Klemmriemen können dabei in unterschiedlichen Härtegraden ausgeführt sein.

Der Klemmriemen kann mehrteilig aufgebaut sein und zum Beispiel eine mit Metallarmierungen versehene Trägerschicht aufweisen, auf die der Kontaktbereich des Klemmriemens aufgeklebt ist. Vorzugsweise ist der Klemmriemen ein endloser Riemen.

Damit keine Verformungen des Klemmriemens im Bereich der Umlenkungen erfolgt, ist der Klemmriemen vorzugsweise an der Vorderseite eingeschnitten. Die Form der Einschnitte kann dabei beliebige dem Fachmann hierfür bekannte Geometrien aufweisen.

Wie bereits erwähnt können mit der vorliegenden Transportvorrichtung beliebig geformte Behälter transportiert werden. Vorzugsweise sind die Behälter jedoch Zylinderförmig und haben einen Durchmesser von 50 bis 100 mm. Der Durchmesser des Drehzylinders bzw. der Behälterstützringe kann entsprechend des Durchmessers der zu befördernden Behälter gewählt werden und ist im Prinzip frei wählbar. Vorzugsweise kann der Drehzylinder einen Durchmesser von zwischen 25 und 200 cm aufweisen.

Die Behälterstützringe können aus beliebigem geeignetem Material bestehen und können dazu vorgesehen sein, dass die zu transportierenden Behälter in direktem Kontakt mit den Behälterstützringen in der Überführeinrichtung befördert werden.

Die Lauffläche der Behälterstützringe des Drehzylinders kann auch mit einem Schutzband versehen sein. Das Schutzband kann vorteilhaft aus einem elastischen Kunststoff gebildet sein. Das Schutzband reduziert bzw. vermeidet eine Abnutzung der Behälterstützringe und kann demgegenüber relativ leicht ausgewechselt werden. Die Reibungseigenschaften des Schutzbandes können zudem optimal an die zu transportierenden Behälter angepasst werden.

Das Schutzband kann außerhalb des Transportbereichs der Überführeinrichtung zusätzlich auch über eine weitere Rolle geführt werden. Diese weitere Rolle kann dazu dienen die Spannung des Schutzbands über den Drehzylinder zu variieren. Zusätzlich kann diese weitere Rolle aber auch angetrieben sein und kann somit auch als Antriebselement für den Drehzylinder verwendet werden.

Der oder die Klemmriemen werden vorteilhafterweise jeweils über zwei Umlenkrollen gespannt. Die Umlenkrollen können dabei einen geeigneten Durchmesser, vorzugsweise einen Durchmesser von 10 bis 25 cm haben. Der Klemmriemen muss dabei so über die Umlenkrollen gespannt sein, dass die einlaufenden Behälter zwischen dem Klemmriemen und dem Drehzylinder aufgenommen werden und dann während des Transports auf der Überführeinrichtung sicher zwischen Klemmriemen und Drehzylinder eingeklemmt bleiben. Während des Betriebs sollte die Riemenspannung im Wesentlichen konstant gehalten werden. Die benötigte wirksame Länge des Vorlaufstrangs des Klemmriemens kann sich während des Betriebs verändern und hängt dabei insbesondere davon ab, wie viele Behälter momentan auf der Überführeinrichtung befördert werden.

Damit der Vorlaufstrang und der Rücklaufstrang des Klemmriemens nicht aufeinander reiben, können ein oder mehrere Stützelemente vorgesehen sein, über die der Rücklaufstrang eines Klemmriemens geführt wird. Insbesondere bei Richtungsänderungen von über 90° besteht nämlich die Gefahr, dass der Rücklaufstrang des Klemmriemens gegen den inneren Vorlaufstrang des Klemmriemens läuft und es dabei wiederum zu unerwünschter Reibung kommt.

Diese weiteren Stützelemente können insbesondere ein oder mehrere Stützrollen sein, über die der Rücklaufstrang des Klemmriemens geführt wird. Je nach Länge der Überführungsstrecke können ein oder mehrere solcher Stützrollen vorgesehen werden.

Die erfindungsgemäße Transportvorrichtung weist ferner eine Ausgleichseinrichtung auf, mit der die Riemenlänge des Vorlaufstrangs des Klemmriemens eingestellt werden kann. Die Riemenlänge des Vorlaufstrangs des Klemmriemens ist die Länge des Klemmriemens im Bereich der Überführeinrichtung, also in dem Bereich in dem die Behälter zwischen dem Drehzylinder und dem Klemmriemen eingeklemmt gehalten werden. Die in diesem Bereich benötigte Länge des Klemmriemens hängt von der Anzahl der momentan auf der Überführeinrichtung beförderten Behälter ab, und nimmt mit der Anzahl der momentan auf der Überführeinrichtung beförderten Behälter zu.

Die Ausgleichseinrichtung kann dabei ein oder mehrere Ausgleichselemente umfassen, die innerhalb des Klemmriemens, also zwischen den Umlenkrollen innerhalb der Bahn, die durch den oder die umlaufenden Klemmriemen beschrieben wird, angeordnet sind.

Die Riemenlänge des Vorlaufstrangs des Klemmriemens kann mit den Ausgleichselementen in Abhängigkeit von der Anzahl, Form und/oder Größe der auf der Überführeinrichtung zu transportierenden Behälter eingestellt werden.

Vorzugsweise ist das Ausgleichselement ausgebildet den Rücklaufstrang des Klemmriemen zu kontaktieren und gegen diesen in einer Richtung, welche dem Drehzylinder abgewandt ist, angestellt zu werden.

Wenn sich die Anzahl der auf der Überführeinrichtung transportierten Behälter ändert, kann die wirksame Länge des Vorlaufstrangs des Klemmriemens auf einfache Weise über das Ausgleichselement verändert werden.

Vorzugsweise umfasst das Ausgleichselement eine Stelleinrichtung, mit der eine Stützrolle gegen den Rücklaufstrang des Klemmriemens angestellt werden kann. Das Ausgleichselement kann dabei eine motorisch angetriebene, eine mechanische, eine pneumatische oder eine hydraulische Stelleinrichtung sein. Eine motorisch angetriebene Stelleinrichtung kann insbesondere einen elektrischen Linearantrieb umfassen. Bei der Verwendung von mehreren Stützrollen können alle oder eine beliebige Anzahl der Stützrollen mit einer Stelleinrichtung versehen sein.

Die Ausgleichseinrichtung dient vor allem dazu, die benötigte Länge des Vorlaufstrangs des Klemmriemens an die momentane Transportsituation auf der Überführeinrichtung anzupassen. Gleichzeitig stellt die Ausgleichseinrichtung aber sicher, dass die Riemenspannung während des Betriebs konstant bleibt. Dadurch kann sichergestellt werden, dass die Behälter jederzeit mit einem vorgegebenen Anpressdruck an den Drehzylinder gedrückt und sicher gehalten werden.

Das mindestens eine Ausgleichselement der Ausgleichseinrichtung wird dabei vorzugsweise so eingestellt, dass die zugeordnete Stützrolle mit einem konstanten Druck gegen den Rücklaufstrang des Klemmriemens angestellt ist. Wenn sich die benötigte Länge des Vorlaufstrangs des Klemmriemens ändert, dann wird die Position der Stützrolle von dem Ausgleichselement so verfahren, dass bei konstanter Riemenspannung der Vorlaufstrang entsprechend verlängert, bzw. verkürzt wird. Je nach Dimensionierung der Überführeinrichtung, können dabei Längenänderungen von bis zu mehreren Dezimetern auftreten. Die ein oder gegebenenfalls mehreren Ausgleichselemente der Ausgleichsvorrichtung müssen daher entsprechend weite Verfahrwege und damit einhergehende Längenänderungen bewerkstelligen können.

Durch das Vorsehen der Ausgleichseinrichtung kann der Abstand der Umlenkrollen des Klemmriemens unverändert bleiben. Darüber hinaus kann eine Druck- bzw. Dichtigkeitsprüfung durch das Vorsehen der Ausgleichseinrichtung optimiert erfolgen, da der auf die zu transportierenden Behälter ausgeübte Druck durch die Einstellung der Spannung des Klemmriemens optimal eingestellt werden kann.

Bei großen Umschlingungswinkeln kann es vorkommen, dass der Vorlaufstrang des Klemmriemens während des Betriebs um seine vorgegebene vertikale Position schwankt, da der Klemmriemen ja lediglich durch die beiden Umlenkrollen am Einlauf- und am Auslaufende der Überführeinrichtung geführt wird. Insbesondere wenn Behälter im Bereich der Überführeinrichtung nach unten abrutschen, können diese den Klemmriemen ebenfalls nach unten verschieben. Um die vertikale Position des Vorlaufstrangs des Klemmriemens besser zu kontrollieren, kann deshalb eine zusätzliche Führungseinrichtung vorgesehen sein. Diese Führungseinrichtung kann dabei mindestens eine Führungsrolle aufweisen, die mittels einer zugeordneten Anstelleinrichtung gegen die Rückseite des Vorlaufstrangs des Klemmriemens vorgespannt ist. Die Rolle hat dabei vorzugsweise die Form einer zylindrischen Scheibenspule und weist an ihren Stirnseiten überstehende Begrenzungen auf, zwischen denen der Klemmriemen geführt wird. Diese stirnseitigen Begrenzungen sollen dabei soweit überstehen, dass der Klemmriemen noch sicher dazwischen geführt werden kann, dürfen aber nicht soweit vorstehen, dass sie sich über den Klemmriemen hinaus erstrecken und in Kontakt mit den zu transportierenden Behältern kommen.

Durch die Anstelleinrichtung wird sichergestellt, dass jede Führungsrolle immer der aktuellen Position des Klemmriemens nachgeführt wird und somit jederzeit an der Rückseite des Vorlaufstrangs des Klemmriemens anliegt. Die stirnseitigen Begrenzungen der Führungsrolle sorgen dann dafür, dass der Klemmriemen auf der durch die Führungsrolle vorgegebenen vertikalen Position gehalten wird. Die Anzahl der Führungseinrichtungen ist dabei frei wählbar und kann sich an der Länge der Überführeinrichtung orientieren. Vorzugsweise sind die Führungseinrichtungen gleichmäßig über die Länge der Überführeinrichtung verteilt.

Vorzugsweise ist der äußere Umfang des Drehzylinders gleichmäßig kreisförmig ausgebildet. Gemäß diesem Aspekt kann der Drehzylinder eine Vielzahl von Behältern gleichzeitig transportieren, ohne dass die Transportleistung des Drehzylinders von der Zuführrate der zu transportierenden Behälter abhängig wäre. Insbesondere ist der Drehzylinder nicht als Sternrad ausgebildet, welches nur bei einer spezifischen Antriebsgeschwindigkeit und einer spezifischen Zufuhrrate der zu transportierenden Behälter betrieben werden kann.

Vorzugsweise sind der Drehzylinder und der Klemmriemen antreibbar ausgebildet, wobei die Geschwindigkeiten des Drehzylinders und des Klemmriemens unabhängig voneinander eingestellt werden können.

Der Klemmriemen und der Drehzylinder können derart angetrieben werden, dass Behälter zwischen dem Klemmriemen und dem Drehzylinder gefördert werden können, ohne dass die Behälter sich ungewünscht drehen. In diesem Fall wird die Antriebsgeschwindigkeit des Klemmriemens entsprechend der Krümmung der gekrümmten Transportstrecke vorzugsweise etwas höher gewählt als die Umfangsgeschwindigkeit des Drehzylinders.

Die Antriebsgeschwindigkeit zwischen dem Klemmriemen und dem Drehzylinder kann auch bewusst unterschiedlich gewählt werden, sodass eine gewisse Drehung der Behälter stattfindet, die zwischen dem Klemmriemen und dem Drehzylinder gefördert werden. Auf diese Weise kann eine Behälterinspektion, insbesondere eine Druck- und Dichtigkeitsprüfung der Behälter, optimiert werden, da eine etwaige Undichtigkeitsstelle eines Behälters aufgrund der Drehung nicht permanent durch den angepressten Klemmriemen und den angepressten Drehzylinder verdeckt wird. Vorzugsweise werden zu untersuchende Behälter um etwa 90 Grad gedreht während sie die Transportvorrichtung durchlaufen. Auch eine optische Inspektion von Behältern kann durch eine gewisse Drehbewegung optimiert werden, da in diesem Fall die Behälter von mehreren Seiten inspiziert werden können.

Der Antrieb des Klemmriemens sowie des Drehzylinders kann durch beliebige Motoren realisiert werden. Besonders geeignet sind in diesem Zusammenhang Synchronmotoren, vorzugsweise permanent erregte Synchronmotoren.

Der Antrieb des Drehzylinders ist vorzugsweise in die Achse des Drehzylinders integriert. Vorzugsweise kommt als Antrieb ein Außenläufermotor zum Einsatz, der als Teil des Drehzylinders ausgebildet ist. Hierdurch wird der konstruktive Aufwand zum Antreiben des Drehzylinders verringert. Darüber hinaus wird eine Platzersparnis erzielt, da oberhalb und unterhalb des Drehzylinders keine Motor- und Antriebselemente mehr vorgesehen werden müssen. Wie oben erwähnt kann der Antrieb des Drehzylinders aber auch über ein Schutzband erfolgen, welches über die Behälterstützringe und eine außerhalb des Transportbereichs vorgesehene Antriebsrolle gespannt ist.

Der Antrieb des Klemmriemens ist vorzugsweise in einer der beiden Umlenkrollen angeordnet, um welche der Klemmriemen gespannt ist. Auch hierbei kann als Antrieb ein Außenläufermotor zum Einsatz kommen Der Außenläufermotor kann vorzugsweise die Umlenkrolle ausbilden. Vorzugsweise wird hierdurch der Raum vergrößert, der zur Anordnung einer Inspektionsvorrichtung zur Verfügung steht. Durch die Verwendung von Außenläufermotoren, die im Drehzylinder bzw. den Umlenkrollen integriert sind, wird nicht nur eine Platzersparnis erzielt, sondern die Transportvorrichtung wird auch insgesamt besser zugänglich, wodurch zum Beispiel Wartung und Betrieb solcher Transportvorrichtungen erleichtert wird.

Wenn nur eine der Umlenkrollen angetrieben ist, dann ist der Antrieb vorzugsweise in der Umlenkrolle angeordnet, welche sich in Transportrichtung der zu befördernden Behälter stromabwärts befindet. Hierdurch wird gewährleistet, dass der Vorlaufstrang des Klemmriemens jederzeit straffgezogen ist.

Eine noch bessere Kontrolle der Riemengeschwindigkeit kann dadurch erzielt werden, dass beide Umlenkrollen angetrieben sind. Insbesondere wenn sich noch keine Behälter auf der Überführeinrichtung befinden, kann die Geschwindigkeit des Klemmriemens auch elektronisch so an die Umfangsgeschwindigkeit des Drehzylinders angepasst werden, dass es zu keiner Reibung zwischen dem Klemmriemen und dem Drehzylinder kommt. In diesem Fall muss der Drehzylinder dann auch nicht notwendigerweise einen Riemenstützring aufweisen.

Wenn der Drehzylinder keinen Riemenstützring aufweist, dann besteht insbesondere beim Einlaufen der ersten Behälter auf die Überführeinrichtung und beim Verlassen der letzten Behälter der Überführeinrichtung die Gefahr, dass der Klemmriemen zumindest abschnittsweise mit dem Drehzylinder in Kontakt kommt. Aufgrund der Oberflächenbeschaffenheit und der Spannung des Klemmriemens kann es dabei zu erheblichen Reibungskräften kommen, die die Funktion der Überführeinrichtung erheblich beeinträchtigen. Es kann deshalb in diesen Situationen erforderlich sein, die Geschwindigkeit des Drehzylinders und die Geschwindigkeit des Klemmriemens aneinander anzupassen. Genauer gesagt muss die Umfangsgeschwindigkeit des Drehzylinders so geregelt werden, dass diese der Riemengeschwindigkeit der Innenseite des Klemmriemens, also der Seite des Klemmriemens, die mit den Behältern bzw. dem Drehzylinder in Kontakt kommt, entspricht.

Aber auch dann wenn sich bereits Behälter auf der Überführeinrichtung befinden, kann durch eine Variation der Antriebsgeschwindigkeiten der Transport auf der Überführeinrichtung optimierte werden. Durch die Variation der Antriebsgeschwindigkeiten der Umlenkrollen kann nämlich auch die verfügbare Länge des Vorlaufstrangs des Klemmriemens temporär verändert werden. Wenn die Umlenkrolle am stromaufwärts gelegenen Einlaufbereich der Überführeinrichtung (Einlaufrolle) kurzfristig eine höhere Umfangsgeschwindigkeit als die Umlenkrolle am stromabwärts gelegenen Auslaufbereich (Auslaufrolle) der Überführeinrichtung aufweist, so wird die Riemenlänge im Vorlaufstrang erhöht und die Behälter werden weniger stark an den Drehzylinder gepresst. Umgekehrt wird die Riemenlänge im Vorlaufstrang erhöht, wenn die Einlaufrolle kurzfristig mit einer höheren Umfangsgeschwindigkeit als die Auslaufrolle betrieben wird.

Eine zu geringe Länge des Vorlaufstrangs des Klemmriemens kann hinderlich sein, wenn auf der erfindungsgemäßen Transportvorrichtung die ersten Behälter in die Überführeinrichtung einlaufen. Wenn die Riemenlänge in diesem Fall zu gering ist, kann es vorkommen, dass die im Wesentlichen ohne Staudruck einlaufenden Behälter nicht gegen den Riemendruck auf die Überführeinrichtung gelangen. In diesem Fall kann es sinnvoll sein, die Riemenlänge im Vorlaufstrang dadurch temporär zu erhöhen, dass die Einlaufrolle schneller als die Auslaufrolle betrieben wird. Mit der Steuerung der Geschwindigkeiten der Umlenkrollen kann also eine Feineinstellung der Riemenlänge des Vorlaufstrangs vorgenommen werden.

Mit der kurzzeitigen Veränderung der Riemenlänge geht auch eine Veränderung der Riemenspannung im Vorlaufstrang einher. Um die Riemenspannung im Vorlaufstrang wieder auf das ursprüngliche Niveau zurückzusetzen, müssen die Umlenkrollenrollen anschließend gegebenenfalls umgekehrt angesteuert werden. Um eine kurzfristig reduzierte Riemenspannung wieder auszugleichen, muss in einem solchen Fall also die Einlaufrolle kurzfristig langsamer als die Auslaufrolle betrieben werden.

Für die Regelung der Länge des Vorlaufstrangs des Klemmriemens ist es von Vorteil, wenn sich die benötigte Länge des Vorlaufstrangs des Klemmriemens im Betrieb möglichst wenig ändert. Situationen, in denen große Abstände zwischen den Behältern auftreten, sowie ein erstmaliges Befüllen und Entleeren der Überführeinrichtung sollten daher weitestgehend vermieden werden. Eine Möglichkeit um solche Situationen, insbesondere zu große Abstände zwischen den Behältern zu vermeiden, besteht darin, die Geschwindigkeit des anfördernden Transporteurs entsprechend zu regeln. Bei relativ geringer Behälterdichte kann zum Beispiel die Anfördergeschwindigkeit erhöht werden, um somit Lücken zwischen den Behältern zu schließen oder zu reduzieren.

Eine weitere Möglichkeit zur Vermeidung von Variationen in der benötigten Länge des Vorlaufstrangs des Klemmriemens besteht darin, bei Bedarf zusätzliche Behälter oder Behälterattrappen in den Behälterstrom einzuschleusen. Diese zusätzlichen Behälter oder Behälterattrappen können zum Beispiel Leerbehälter sein, die auf einer parallel zum anförderenden ersten Transportabschnitt angeordneten Pufferstrecke vorgehalten werden und bei Bedarf in den Behälterstrom eingeschleust werden können. Als Behälterattrappen eignen sich beliebige Körper, deren Form und Material so beschaffen ist, dass diese problemlos in den jeweiligen Behälterstrom integriert werden können. Bei den Behälterattrappen ist allerdings sicherzustellen, dass diese nach der Überführeinrichtung auch wieder aus dem Behälterstrom ausgeleitet werden. Zum Ein- und Ausschleusen der zusätzlichen Behälter kann eine beliebige dem Fachmann bekannte Ein- bzw. Ausschleusvorrichtung eingesetzt werden.

In einer Ausführungsform bei der die erfindungsgemäße Transportvorrichtung einen Umschlingungswinkel von 180° aufweist, kann die Pufferstrecke zum Beispiel als ein umlaufender Transporteur ausgeführt sein, der parallel und innerhalb der Transportvorrichtung angeordnet ist. Der umlaufende Transporteur kann von einem umlaufenden kurvengängigen Transportband oder auch von einem Drehteller gebildet sein. Bei der Ausführungsform als Drehteller kann dieser zum Beispiel einen Durchmesser haben, der dem Durchmesser des Drehzylinders entspricht. Der Drehteller ist dabei vorzugsweise versetzt zum Drehzylinder zwischen dem ersten und dem zweiten Transportabschnitt angeordnet.

Ein Einteilkeil kann dazu verwendet werden die zusätzlichen Behälter stromaufwärts der Überführeinrichtung von der Pufferstrecke in den Behälterstrom auf dem ersten anfördernden Transportabschnitt der Transportvorrichtung zu integrieren. Stromabwärts der Überführeinrichtung kann wiederum ein Einteilkeil vorgesehen sein, mit dem die zusätzlichen Behälter dann wieder aus dem Behälterstrom ausgeleitet und zurück auf den umlaufenden Transporteur der Pufferstrecke geführt werden.

Durch die Einschleusung von zusätzlichen Behältern oder Behälterattrappen können Lücken im Behälterstrom gefüllt werden. Dies ist insbesondere bei solchen Ausführungsformen hilfreich, bei denen der Drehzylinder keinen Stützring aufweist und daher die Gefahr besteht, dass der Klemmriemen in Kontakt mit dem Drehzylinder gerät. Solche Situationen können zwar auch über die elektronische Abstimmung der Geschwindigkeit des Klemmriemens gegenüber der Umfangsgeschwindigkeit des Drehzylinders gelöst werden. Allerdings führt eine Veränderung der Relativgeschwindigkeit zwischen Klemmriemen und Drehzylinder auch dazu, dass sich die Rotation der sich auf der Überführeinrichtung befindenden Behälter um ihre eigene Achse ändert. Durch das Einschleusen zusätzlicher Behälter kann dagegen die Gefahr zu größer Lücken im Behälterstrom vermieden werden. Dadurch kann die Klemmriemengeschwindigkeit jederzeit unabhängig von der Geschwindigkeit des Drehzylinders eingestellt werden.

Auch bei der Inbetriebnahme oder bei einer Unterbrechung des Betriebs (z.B. am Ende des Arbeitstags) können die zusätzlichen Behälter dazu genutzt werden, um auch in diesen Situationen konstante Transportbedingungen zu gewährleisten. Zum Beispiel können am Ende einer Behältercharge nach dem letzten Behälter noch ein oder mehrere der zusätzlichen Behälter oder Behälterattrappen in den Behälterstrom eingeschleust werden, damit auch für den letzten Behälter auf der Überführeinrichtung identische Transportbedingungen herrschen wie für die anderen Behälter der Behältercharge. Wenn die zusätzlichen Behälter nach der Überführeinrichtung wieder auf die Pufferstrecke ausgeschleust werden, ist bereits eine relativ geringe Anzahl an zusätzlichen Behältern ausreichend, um jederzeit eine kontinuierliche Förderung durch die Überführeinrichtung zu ermöglichen.

Die zusätzlichen Behälter können auch Testbehälter sein, die zur Überprüfung von Inspektionseinrichtungen eingesetzt werden. Solche Testbehälter müssen regelmäßig in den Behälterstrom eingeschleust werden, um das ordnungsgemäße Funktionieren der Inspektionseinrichtungen zu überprüfen. Normalerweise müssen zum Zweck der Einschleusung der Testbehälter Lücken im Behälterstrom geschaffen werden, wodurch der Produktionsprozess beeinträchtigt wird. Mit der vorliegenden Erfindung können dagegen ohnehin vorhandene Lücken im Behälterstrom ausgenutzt werden, um Testbehälter einzuschleusen und damit nicht nur einen ungewollten Kontakt des Klemmriemens mit dem Drehzylinder zu vermeiden, sondern gleichzeitig auch eine Überprüfung der an der Überführeinrichtung angeordneten Inspektionseinrichtungen vorzunehmen.

Vorzugsweise werden die Behälter auf der gekrümmten Transportstrecke zumindest teilweise ausschließlich zwischen dem Klemmriemen und dem äußeren Umfang des Drehzylinders gehalten.

Auf diese Weise wird eine Behälterinspektion der transportierten Behälter optimiert, da die Behälter von oben sowie von unten untersucht werden können.

Vorzugsweise ist unterhalb und/oder oberhalb der Transportstrecke zumindest eine Inspektionseinrichtung zur Behälterinspektion angeordnet.

Die erfindungsgemäße Transportvorrichtung kann auch vorteilhaft bei der Dichtigkeitskontrolle von verformbaren, befüllten Behältern, wie zum Beispiel befüllten Kunststoffflaschen oder Metalldosen eingesetzt werden. Dazu wird ein exakt dosierbarer Druck auf die Behälter ausgeübt. Sind die Behälter undicht, ist der Innendruck niedriger, während der Füllstand ansteigt. Um auch kleine Lecks zu detektieren, muss dabei eine gewisse Verweilzeit der Behälter in der Druckeinrichtung gewährleistet werden. Dies kann in der erfindungsgemäßen Transportvorrichtung zum Beispiel dadurch erreicht werden, dass die Behälter länger als nur eine Viertel-Umdrehung zwischen dem Drehzylinder und dem Klemmriemen gehalten werden. Der Druck kann in der erfindungsgemäßen Transportvorrichtung zum Beispiel über die Riemenspannung eingestellt werden.

Vorzugsweise sind der erste Transportabschnitt und der zweite Transportabschnitt als ein durchgehendes Transportband ausgebildet, und die gekrümmte Transportstrecke ist ausgebildet, die Behälter zwischen dem Klemmriemen und dem äußeren Umfang des Drehzylinders schwebend von dem ersten Transportabschnitt auf den zweiten Transportabschnitt zu überführen. In diesem Fall werden die Behälter von der Transportvorrichtung von dem Transportband weggehoben bzw. geführt und nach dem Durchlaufen der gekrümmten Transportstrecke und der Durchführung der Behälterinspektion wieder auf das Transportband abgesetzt bzw. überführt. Die beiden Transportabschnitte können dabei entweder in dieselbe Richtung verlaufen oder unter einem Winkel zueinander angeordnet sein.

Alternativ sind der erste Transportabschnitt sowie der zweite Transportabschnitt als separate Transportbänder ausgebildet. Insbesondere bei der Dichtigkeitsprüfung ist es nicht notwendig, dass die Behälter zumindest kurzfristig frei schwebend transportiert werden. Bei diesen Ausführungsformen kann daher der Behälter zusätzlich dazu, dass er zwischen Klemmriemen und Drehzylinder eingeklemmt ist, auch noch jederzeit auf einem durchgängigen Transportband befördert werden, welches dem Verlauf der gekrümmten Transportbahn der Überführeinrichtung entspricht.

Bei dem Transportband bzw. den Transportbändern können übliche Förderbänder oder Gliederkettenförderer zum Einsatz kommen. Die Behälter können auf dem Transportband zusätzlich oder ausschließlich durch Luftkissen oder Rollen gefördert werden. Auch kann das Transportband als feststehende Platte ausgebildet sein, über die die Behälter durch Staudruck geschoben werden.

Die erfindungsgemäße Transportvorrichtung ist vorzugsweise als Teil einer Behälterinspektionseinrichtung vorgesehen. Die Behälterinspektionseinrichtung ist ausgebildet zur Inspektion von Behältern, vorzugsweise von Behältern aus Glas oder transparenten Kunststoffen, wie zum Beispiel PET. Insbesondere handelt es sich bei den Behältern um Glas- oder PET Flaschen im Rahmen einer Behälterinspektion in der Getränkeindustrie. Zu diesem Zweck kann die Behälterinspektionseinrichtung weitere Komponenten aufweisen, insbesondere eine Strahlungsquelle, eine Detektionseinrichtung und eine Auswerteeinrichtung. Die Strahlungsquelle kann Strahlung in Richtung der zu untersuchenden Behälter emittieren, wenn sich diese in der Transportvorrichtung und insbesondere der gekrümmten Transportstrecke befinden und von einem ersten Transportabschnitt zu einem zweiten Transportabschnitt überführt werden. Die Strahlung durchstrahlt die zu untersuchenden Behälter und wird anschließend von der Detektionseinrichtung detektiert. Die Auswerteeinrichtung wertet die von der Detektionseinrichtung detektierte Aufnahme aus. Die Strahlungsquelle kann im Wesentlichen elektromagnetische Strahlung beliebiger Wellenlänge, IR-Strahlung, sichtbares Licht, UV-Licht oder Röntgenstrahlung emittieren.

Im Folgenden wird die vorliegende Erfindung durch die beiliegenden Zeichnungen näher beschrieben. Hierbei zeigt:
- Fig. 1: eine schematische perspektivische Darstellung der erfindungsgemäßen Transportvorrichtung,
- Fig. 2: eine Draufsicht einer erfindungsgemäßen Transportvorrichtung gemäß Fig. 1,
- Fig. 3: eine Draufsicht einer weiteren erfindungsgemäßen Transportvorrichtung,
- Fig. 4: eine Querschnittsdarstellung durch einen Behälter und den Drehzylinder sowie den Klemmriemen gemäß der erfindungsgemäßen Transportvorrichtung,
- Fig. 5: eine schematische perspektivische Darstellung der erfindungsgemäßen Transportvorrichtung mit einer Inspektionseinrichtung,
- Fig. 6: eine erfindungsgemäße Transportvorrichtung mit Umschlingungswinkel von 180°,
- Fig. 7: eine weitere erfindungsgemäße Transportvorrichtung mit Umschlingungswinkel von 180°,
- Fig. 8: eine erfindungsgemäße Transportvorrichtung mit Umschlingungswinkel von etwa 300°,
- Fig. 9: eine Querschnittsdarstellung durch einen Behälter und einen Drehzylinder mit Stützeinrichtung gemäß einer weiteren Ausführungsform,
- Fig. 10: Draufsicht der Transportvorrichtung gemäß der Ausführungsform nach Fig. 9, ohne Behälter,
- Fig. 11: Transportvorrichtung gemäß Fig. 10, bei der sich bereits Behälter zwischen Klemmriemen und Drehzylinder befinden,
- Fig. 12: Transportvorrichtung gemäß Fig. 9 bis 11 mit zusätzlicher Führungseinrichtung, und
- Fig. 13: Transportvorrichtung gemäß Fig. 6 mit Pufferstrecke.

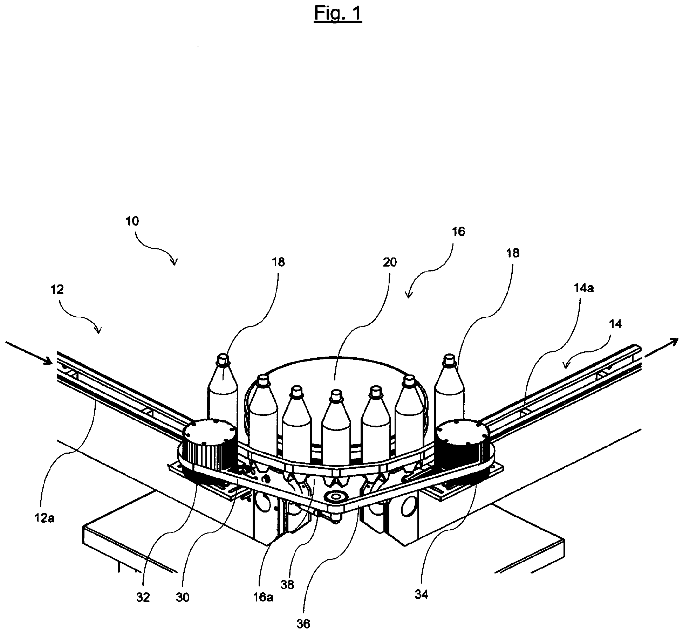

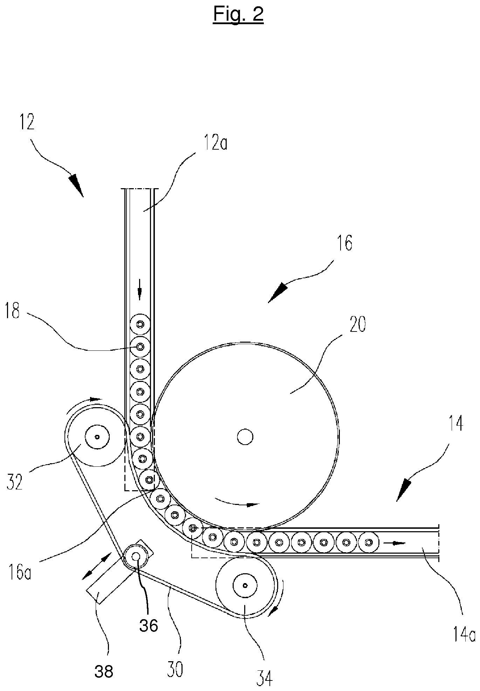

Die Fig. 1 und 2 zeigen eine Ausführungsform der erfindungsgemäßen Transportvorrichtung 10 mit einem ersten Transportabschnitt 12, einem zweiten Transportabschnitt 14 und einer Überführeinrichtung 16. Die Behälter 18 werden im ersten Transportabschnitt 12 auf einem ersten Transporteur 12a in der durch den Pfeil angegebenen Transportrichtung angefördert. Am Ende des Transporteurs 12a werden die Behälter 18 an die Überführeinrichtung 16 übergeben und von dieser auf einen zweiten, um 90° versetzt angeordneten Transporteur 14a im zweiten Transportabschnitt 14 überführt.

In der Ausführungsform nach Fig. 1 und 2 umfasst die Überführeinrichtung 16 einen Drehzylinder 20 und einen Klemmriemen 30, die jeweils über voneinander unabhängige Antriebe (nicht gezeigt) motorisch angetrieben sind.

Der Klemmriemen 30 wird dabei über zwei Umlenkrollen 32, 34 gespannt. Die beiden Umlenkrollen 32, 34 sind am Umfang des Drehzylinders 20 jeweils so angeordnet, dass ein angeförderter Behälter 18 am Ende des ersten Transportabschnitts 14 zwischen dem Klemmriemen 30 und dem Drehzylinder 20 eingeklemmt wird. Der Behälter 18 wird dann, eingeklemmt zwischen dem Drehzylinder 20 und dem Klemmriemen 30, von der Überführeinrichtung 16 auf den zweiten, um 90° versetzt angeordneten Transporteur 14a befördert. Der Behälter 18 wird erst dann wieder freigegeben, wenn er sich vollständig über dem zweiten Transporteur 14a befindet und auf diesem sicher abgesetzt werden kann.

Sowohl die Umlenkrolle 32 am stromaufwärts gelegenen Einlaufende der Überführeinrichtung 16 als auch die Umlenkrolle 34 am stromabwärts gelegenen Auslaufende der Überführeinrichtung 16, sind dabei über voneinander unabhängig angesteuerte Antriebseinrichtungen (nicht gezeigt) motorisch angetrieben.

Der Klemmriemen ist ein endloser Riemen, der zweiteilig aufgebaut ist. Er umfasst eine mit Metallarmierungen versehene Polyurethan Trägerschicht, auf die ein aus Polyurethan bestehender Kontaktbereich des Klemmriemens aufgeklebt ist. Damit keine Verformungen des Klemmriemens im Bereich der Umlenkungen auftreten, weist der Klemmriemen an der Vorderseite, die mit den Behältern in Kontakt kommt, kerbenförmige Einschnitte auf.

Fig. 1 und 2 zeigen ferner eine Stützrolle 36 mit einem Ausgleichselement 38, welches zur Einstellung der wirksamen Länge des Vorlaufstrangs des Klemmriemens 30 zum Einsatz kommt. Das Ausgleichselement 38 ist gegen den Rücklaufstrang des Klemmriemens 30 in eine Richtung, welche von den zu befördernden Behältern 18 bzw. dem Drehzylinder 20 weg zeigt, mit einer konstanten Kraft angestellt. Wenn sich die Anzahl der auf der Überführeinrichtung transportierten Behälter 18 ändert, wird über das Ausgleichselement 38 die Länge des Vorlaufstrangs des Klemmriemens 30 entsprechend nachgeregelt.

Eine Feineinstellung der Riemenlänge des Vorlaufstrangs des Klemmriemens 30 kann während des Betriebs auch über eine unterschiedliche Ansteuerung der voneinander unabhängigen Antriebe der Umlenkrollen 32 und 34 herbeigeführt werden. Indem man kurzzeitig die einlaufseitige Umlenkrolle 32 etwas schneller laufen lässt als die auslaufseitige Umlenkrolle 34, kann die Riemenlänge des Vorlaufstrangs des Klemmriemens 30 erhöht werden. Umgekehrt wird die Riemenlänge des Vorlaufstrangs des Klemmriemens 30 reduziert, wenn die einlaufseitige Umlenkrolle 32 kurzzeitig etwas langsamer betrieben wird als die auslaufseitige Umlenkrolle 34.

Durch den Klemmriemen 30 sowie die Krümmung des Drehzylinders 20 wird im Bereich der Überführeinrichtung 16 eine gekrümmte Transportstrecke 16a ausgebildet, entlang der die zu befördernden Behälter 18 transportiert werden. Der Drehzylinder 20 hat eine zylindrische Form, wobei der äußere Umfang des Drehzylinders 20, der die Behälter 18 kontaktiert, kreis- bzw. zylinderförmig ausgebildet ist.

Während des Transports auf der gekrümmten Transportstrecke 16a der Überführeinrichtung 16 werden die Behälter 18 lediglich von dem Klemmriemen 30 und dem Drehzylinder 20 gehalten, so dass der Behälterboden frei zugänglich ist und zum Beispiel mittels einer Inspektionseinrichtung 40 untersucht werden kann.

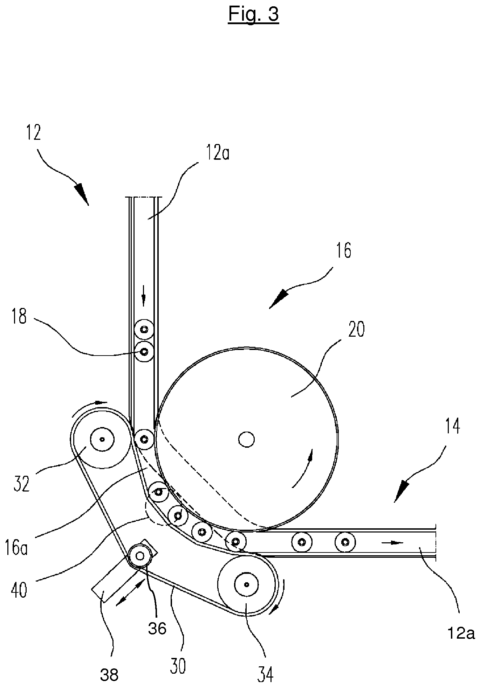

Fig. 3 zeigt eine Draufsicht auf eine erfindungsgemäße Transportvorrichtung 10, die in weiten Teilen der Ausführungsform nach Fig. 1 und 2 entspricht. Allerdings sind in der Ausführungsform nach Fig. 3 der erste Transportabschnitt 12 und der zweite Transportabschnitt 14 unterschiedliche Bereiche eines einzigen Transporteurs 12a. Dieser Transporteur 12a beschreibt einen engeren Kurvenradius als der Drehzylinder 20, sodass der Transporteur 12a im Bereich der Überführeinrichtung 16 unter dem Drehzylinder 20 durchgeführt wird. Abgesehen davon entsprechen alle anderen Komponenten den Komponenten der Transportvorrichtung 10 gemäß Fig. 1 und 2.

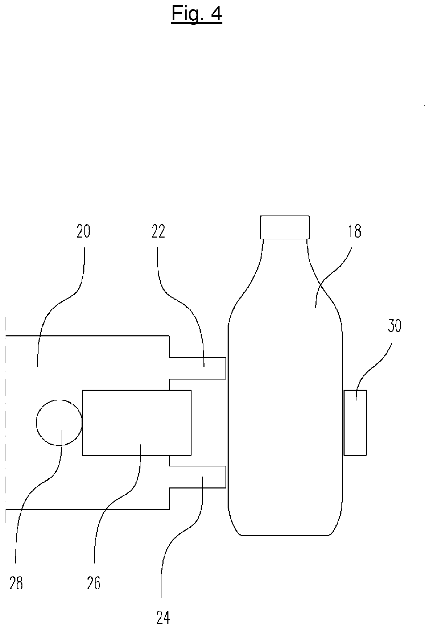

Fig. 4 zeigt eine Ausführungsform des Drehzylinders 20 wie er in den Ausführungsformen der Transportvorrichtungen 10 gemäß den Fig. 1 und 2 eingesetzt werden kann. Der Drehzylinder 20 weist einen oberen Behälterstützring 22 und einen unteren Behälterstützring 24 auf. Der obere Behälterstützring 22 und der untere Behälterstützring 24 sind ausgebildet. zu befördernde Behälter 18 zu kontaktieren. Zwischen dem oberen Behälterstützring 22 und dem unteren Behälterstützring 24 ist ein zurückgesetzter Riemenstützring 26 angeordnet. Der zurückgesetzte Riemenstützring 26 ist frei gelagert. Die Lagerung des Riemenstützrings erfolgt durch ein Lager 28. Demgegenüber ist der obere Behälterstützring 22 und der untere Behälterstützring 24 angetrieben. Vorzugsweise sind der obere Behälterstützring 22 und der untere Behälterstützring 24 mit einem gemeinsamen Antrieb verbunden. Der gemeinsame Antrieb kann sich im Inneren des Drehzylinders 20 befinden oder außerhalb des Drehzylinders 20 angeordnet sein.

Der zurückgesetzte Riemenstützring 26 dient dazu, dass der Klemmriemen 30 auf dem zurückgesetzten Riemenstützring 26 zum Liegen kommt, falls keine Behälter 16 in der Transportvorrichtung transportiert werden. Der Klemmriemen 30 weist entsprechend eine Breite auf, sodass der Klemmriemen 30 nicht mit dem oberen Behälterstützring 22 oder dem unteren Behälterstützring 24 in Kontakt kommt, falls keine Behälter 18 auf der Überführeinrichtung 16 transportiert werden.

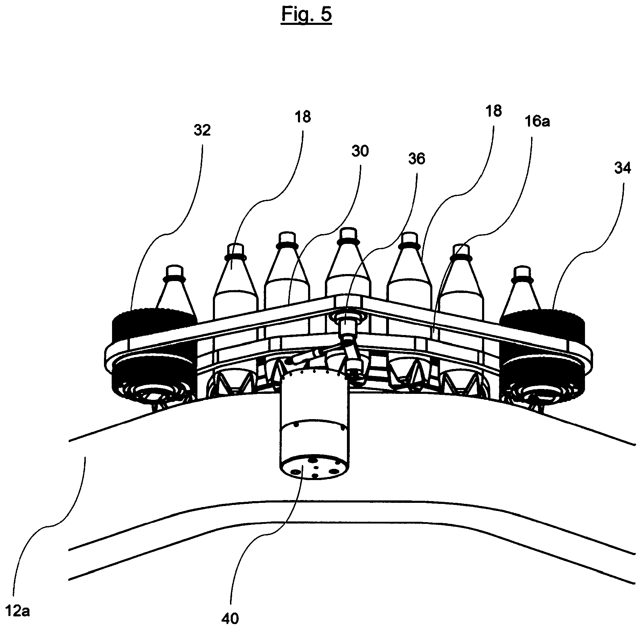

Fig. 5 zeigt den Einsatz einer Inspektionseinrichtung 40 bei der erfindungsgemäßen Transportvorrichtung 10. Die gekrümmte Transportstrecke 16a ist derart ausgebildet, dass zu untersuchende Behälter 18 von einem ersten Transportabschnitt 12 auf einen zweiten Transportabschnitt 14 überführt werden. Zwischen diesen Transportabschnitten 12, 14 werden die Behälter 18 ausschließlich zwischen dem Klemmriemen 30 und dem Drehzylinder 20 gehalten.

Wie in Fig. 5 angedeutet, ist im Bereich der Überführeinrichtung 16, wo der Behälterboden zugänglich ist, eine Inspektionseinrichtung 40 vorgesehen. Bei dieser Inspektionseinrichtung 40 kann es sich um eine optische Inspektionseinrichtung handeln, die beispielsweise untersucht, ob die Bodenbereiche der Behälter 18 Verunreinigungen oder Beschädigungen aufweisen.

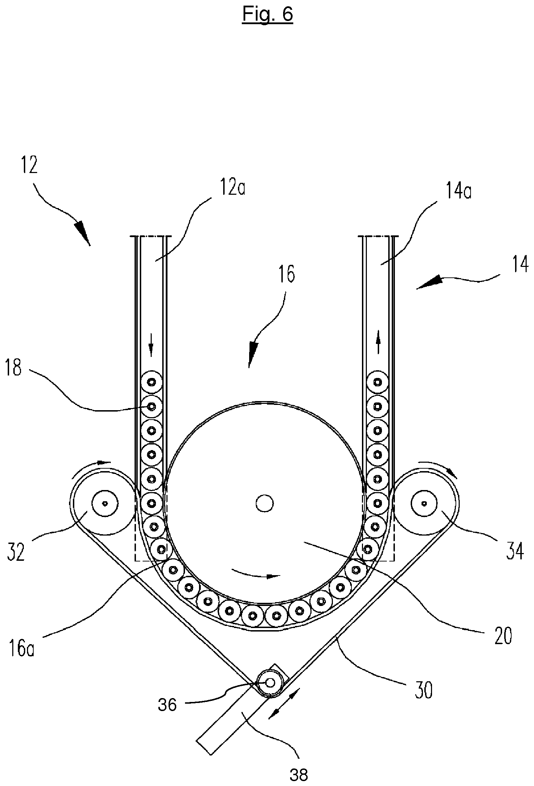

In Fig. 6 ist eine Transportvorrichtung 10 abgebildet, bei der der erste Transportabschnitt 12 und der zweite Transportabschnitt 14 parallel, aber mit entgegengesetzter Transportrichtung, verlaufen. Der Durchmesser des Drehzylinders 20 beträgt in dieser Ausführungsform 50 cm. Der Klemmriemen 30 wird dabei wiederum über zwei Umlenkrollen 32, 34 geführt, die am Einlaufende und am Auslaufende der Überführeinrichtung 16 vorgesehen sind. Der Durchmesser der beiden Umlenkrollen beträgt in dieser Ausführungsform 15 cm. Um zu vermeiden, dass der Vorlaufstrang und der Rücklaufstrang des Klemmriemens 30 in Kontakt kommen und aufeinander reiben, wird der Rücklaufstrang des Klemmriemens 30 über eine einzige Stützrolle 36 geführt. Die Stützrolle 36 ist zusätzlich mit einem Ausgleichselement 38 versehen. Bei dieser Ausführungsform ergibt sich ein Umschlingungswinkel von 180°.

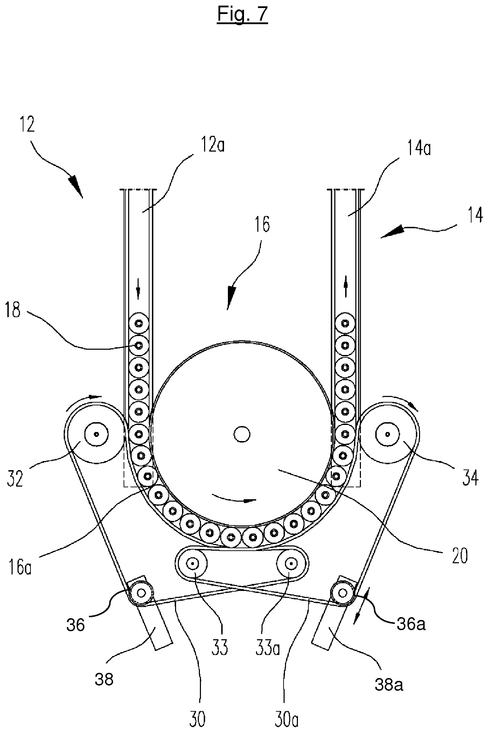

In Fig. 7 ist ebenfalls eine Transportvorrichtung 10 abgebildet, die einen Umschlingungswinkel von 180° bietet. Im Unterschied zur Ausführungsform nach Fig. 6 sind allerdings zwei in Umfangsrichtung des Drehzylinders 20 hintereinander angeordnete Klemmriemen 30, 30a vorgesehen. Der erste Klemmriemen 30 wird über die Umlenkrollen 32, 33 und die Stützrolle 36 geführt. Der zweite Klemmriemen 30a wird über die Umlenkrollen 34, 33a und eine Stützrolle 36a geführt. Die Stützrollen 36, 36a sind zusätzlich wieder mit je einem Ausgleichselement 38, 38a versehen. Die beiden Klemmriemen 30, 30a sind vertikal zueinander versetzt angeordnet, sodass die Behälter 18 im Übergangsbereich vom ersten Klemmriemen 30 zum zweiten Klemmriemen 30a jederzeit fest an den Drehzylinder 20 gedrückt werden.

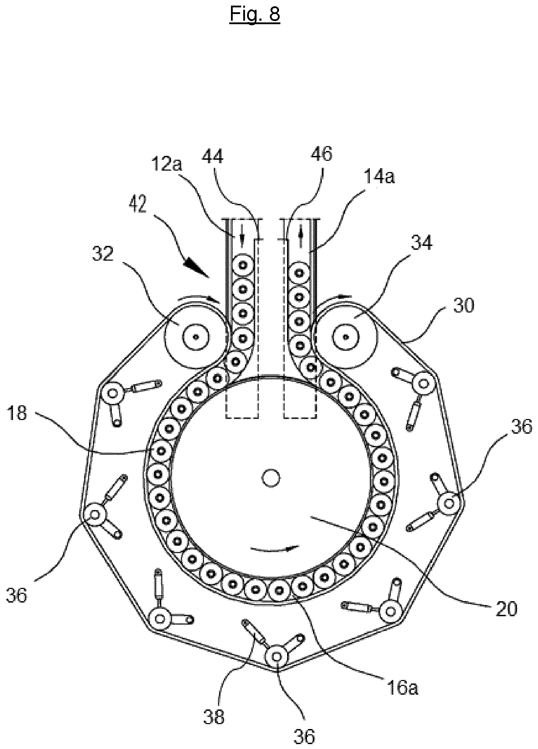

In Fig. 8 ist schließlich ebenfalls eine Transportvorrichtung 10 abgebildet, bei der der erste Transportabschnitt 12 und der zweite Transportabschnitt 14 parallel, aber mit entgegengesetzter Transportrichtung, verlaufen. Der Klemmriemen 30 wird dabei wiederum über zwei Umlenkrollen 32, 34 geführt, die am Einlaufende 42 und am Auslaufende der Überführeinrichtung 16 vorgesehen sind.

In dieser Ausführungsform beträgt der Umschlingungswinkel etwa 330° des Umfangs des Drehzylinders 20. Um zu vermeiden, dass der Klemmriemen 30 auf sich selbst reibt, wird der Rücklaufstrang des Klemmriemens 30 über mehrere Stützrollen 36 geführt. In der vorliegenden Ausführungsform weisen alle Stützrollen 36 auch ein Ausgleichselement 38 auf, um hierüber die Länge des Vorlaufstrangs des Klemmriemens 30 einstellen zu können. Es ist aber auch möglich, dass nur eine oder nur einige der Stützrollen 36 ein Ausgleichselement 38 aufweisen.

Am Einlaufende 42 der Überführeinrichtung 16 ist ein Leitblech 44 vorgesehen. Die Behälter 18 werden dort zwischen dem Leitblech 44 und dem Klemmriemen 30 erfasst und anschließend vom Klemmriemen 30 an den Drehzylinder 20 gedrückt.

Die Behälter 18 verweilen nahezu eine gesamte Umdrehung an dem Drehzylinder 20 und werden dabei von dem Klemmriemen 30 an den Drehzylinder 20 gepresst. Am Auslauf werden die Behälter 18 wiederum an einem Leitblech 46 entlang vom Drehzylinder 20 weggeführt und einer abfördernden Transporteinrichtung 14a übergeben.

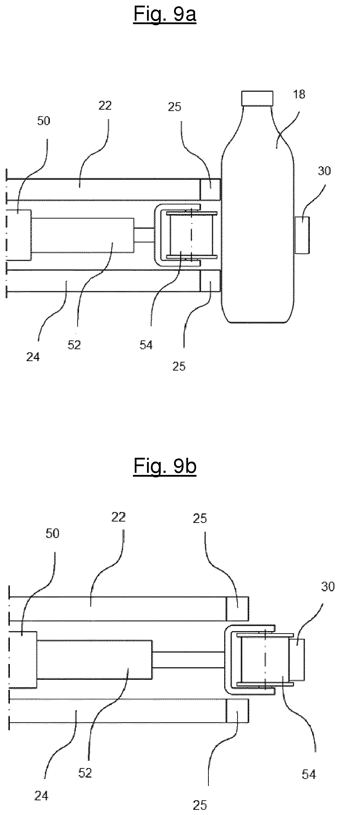

In den Fig. 9 bis 11 ist eine erfindungsgemäße Transportvorrichtung 10 abgebildet, die in weiten Teilen der Vorrichtung gemäß Fig. 6 entspricht. Bei dieser Ausführungsform umfasst der Drehzylinder 20 keine Riemenstützscheibe 26, sondern drei Stützeinrichtungen 50, die jeweils eine Riemenstützrolle 54 und ein Stellelement 52 umfassen. Schnittansichten sind in Fig. 9a und Fig. 9b dargestellt. Die Stützeinrichtungen 50 sind dabei ortsfest angeordnet und drehen sich also nicht mit dem Drehzylinder 20 mit. Die Stellelemente 52 sind jeweils so ausgelegt, dass sie die zugeordnete Riemenstützrolle 54 stufenlos zwischen einer ersten Position und einer zweiten Position in radialer Richtung bezüglich der Drehachse des Drehzylinders 20 verfahren können. In der ersten Position, die in Fig. 9a abgebildet ist, ist das Stellelement 52 eingefahren und die jeweilige Riemenstützrolle 54 befindet sich vollständig innerhalb des Umfangbereichs des Drehzylinders 20. Wie in Fig. 9a gezeigt, kann in dieser Position ein Behälter 18 eingeklemmt zwischen der Lauffläche 25 der Behälterstützringe 22, 24 und dem Klemmriemen 30 gefördert werden. In der zweiten Position, die in Fig. 9b abgebildet ist, ist das Stellelement 52 ausgefahren und zumindest ein Umfangbereich der jeweiligen Riemenstützrolle 54 erstreckt sich radial über den Umfangbereich des Drehzylinders 20 hinaus. In dieser Position wird der Klemmriemen 30 über die Riemenstützrolle 54 geführt, sodass ein Kontakt zwischen dem Klemmriemen 30 und dem Drehzylinder 20 vermieden wird.

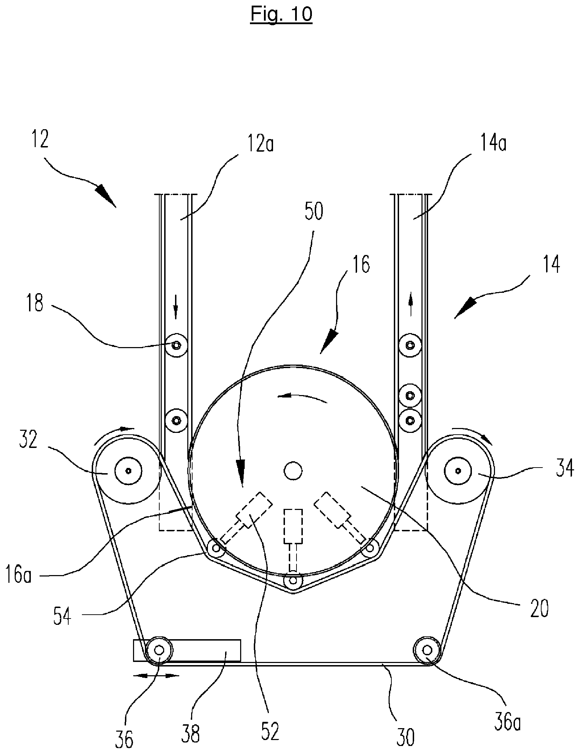

Die Fig. 10 zeigt diese Ausführungsform in einer Aufsicht, wobei sich noch keine Behälter 18 auf der Überführeinrichtung 16 befinden. Alle Stützeinrichtungen 50 sind ausgefahren und der Klemmriemen 30 läuft über alle drei Riemenstützrollen 54 ab ohne den Drehzylinder 20 zu berühren. Die Länge des Vorlaufstrangs des Klemmriemens 30 ist in dieser Ausführungsform selbst bei einer leeren Überführeinrichtung 16 annähernd so groß, wie die benötigte Länge des Vorlaufstrangs des Klemmriemens 30 bei einer komplett gefüllten Überführeinrichtung 16. Aus diesem Grund ist nur eine relative geringe Längenanpassung des Vorlaufstrangs des Klemmriemens 30 notwendig, wenn die ersten Behälter 18 in die Überführeinrichtung 16 einlaufen oder die letzten Behälter 18 die Überführeinrichtung 16 verlassen.

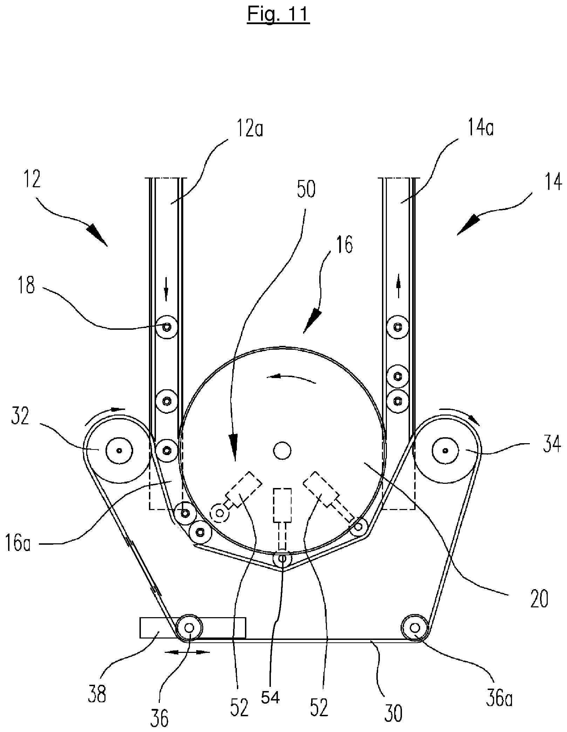

In der Darstellung nach Fig. 11 befinden sich bereits einige Behälter 18 auf der Überführeinrichtung 16. Die erste Stützeinrichtung 50 im Einlaufbereich der Überführeinrichtung 16 ist bereits eingefahren, um die angeförderten Behälter 18 passieren zu lassen. Der Klemmriemen 30 wird in diesem Bereich bereits über die sich auf der Überführeinrichtung 16 befindenden Behälter 18 geführt, sodass hier ein unerwünschter Kontakt mit dem Drehzylinder 20 vermieden wird. Die beiden anderen Stützeinrichtungen 50 sind dagegen noch ausgefahren, da sich in diesem Bereich noch keine Behälter 18 befinden. Die ausgefahrenen Stützeinrichtungen 50 verhindern, dass der Klemmriemen 30 in diesem Bereich in Kontakt mit dem Drehzylinder 20 kommt. Zur Anpassung der Länge des Vorlaufstrangs des Klemmriemens 30 ist eine der Stützrollen 36 mit einem Ausgleichselement 38 versehen.

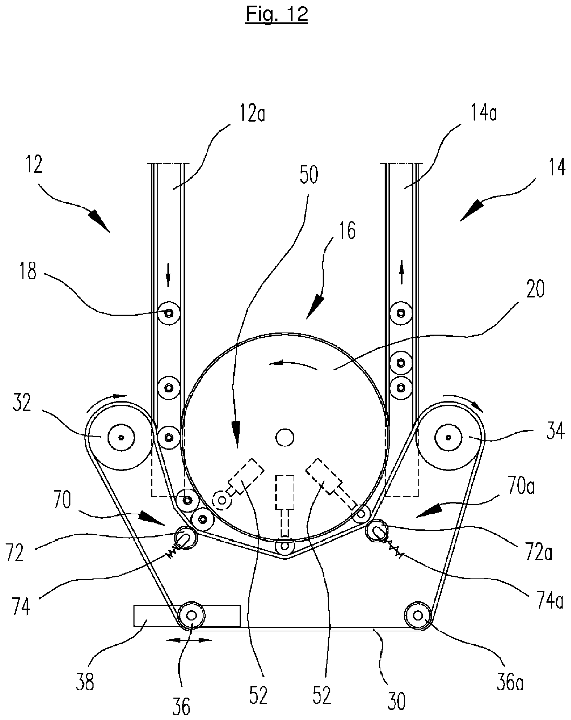

Die Ausführungsform nach Fig. 12 entspricht im Wesentlichen der Ausführungsform nach den Fig. 9 bis 11. In Fig. 12 ist jedoch eine Führungseinrichtung 70 zur Stabilisierung des vertikalen Verlaufs des Vorlaufstrangs des Klemmriemens 30 vorgesehen. Die Führungseinrichtung 70 besteht dabei aus zwei Führungsrollen 72, 72a, die jeweils mittels einer zugeordneten Anstelleinrichtung 74, 74a gegen die Rückseite des Vorlaufstrangs des Klemmriemens 30 vorgespannt ist. Die Führungsrollen 72, 72ahaben dabei jeweils die Form einer zylindrischen Scheibenspule und weisen an den Stirnseiten überstehende Begrenzungen auf, zwischen denen der Klemmriemen geführt wird. Durch die Anstelleinrichtungen 74, 74a wird sichergestellt, dass jede Führungsrollen 72, 72a immer der aktuellen Position des Klemmriemens 30 nachgeführt wird und somit jederzeit an der Rückseite des Vorlaufstrangs des Klemmriemens 30 anliegt.

In Fig. 12 befinden sich zum Beispiel im Bereich der Führungsrollen 72 bereits einige Behälter 18 auf der Überführeinrichtung 16. Der Klemmriemen 30 verläuft über den Außenumfang dieser Behälter 18 und die Führungsrolle 72 wird über die ihr zugeordnete Anstelleinrichtung 74 so positioniert, dass die Führungsrolle 72 in Kontakt mit der Rückseite des Vorlaufstrangs des Klemmriemens 30 ist. Der Klemmriemen 30 wird durch die überstehenden Begrenzungen an den Stirnseiten der Führungsrolle 72 geführt. Im Bereich der Führungsrolle 72a befinden sich dagegen noch keine Behälter auf der Überführeinrichtung 16. In diesem Fall verläuft der Klemmriemen 30 direkt über die in diesem Bereich vorgesehene Riemenstützrolle 54 ab. Die Anstelleinrichtung 72a sorgt dafür, dass die Führungsrolle 72a trotzdem an der Rückseite des Vorlaufstrangs des Klemmriemens 30 anliegt und diesen auf seiner vorgegeben vertikalen Position führt. Zur Anpassung der Länge des Vorlaufstrangs des Klemmriemens 30 ist wiederum eine der Stützrollen 36 mit einem Ausgleichselement 38 versehen.

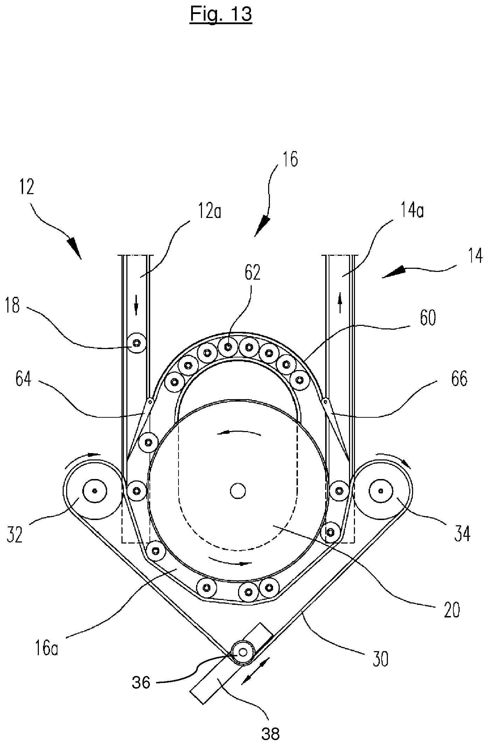

Fig. 13 betrifft eine Modifikation der erfindungsgemäßen Transportvorrichtung 10 gemäß Fig. 6, wobei die Modifikation darin besteht, dass eine zusätzliche Pufferstrecke in Form eines umlaufenden Transporteurs 60 vorgesehen ist, der innerhalb und parallel zu den beiden Transporteuren 12a und 14a angeordnet ist. Auf dem umlaufenden Transporteur 60 sind zusätzliche Behälter 62 vorgesehen, die bei Bedarf über eine Einschleusvorrichtung 64 in den Behälterstrom des ersten Transporteurs 14a eingeschleust werden können. Stromabwärts der Überführeinrichtung ist eine Ausschleusvorrichtung 66 vorgesehen, über die die zusätzlichen Behälter 62 wieder aus dem Behälterstrom ausgesondert und auf den umlaufenden Transporteur 60 zurückbefördert werden können. In der abgebildeten Ausführungsform sind die Einschleus- und Ausschleusvorrichtung 64, 66 jeweils von einem Einteilkeil gebildet. Es können hierzu aber natürlich beliebige dem Fachmann bekannte Ausleiteinrichtungen verwendet werden.

Die Erfindung ist nicht auf die beschriebenen Ausführungsformen beschränkt, sondern ergibt sich aus der Zusammenschau der oben beschriebenen Merkmale.

**Bezugszeichenliste**

| | | | |
|---|---|---|---|
| 10 | Transportvorrichtung | 36 | Stützrolle |
| 12 | erster Transportabschnitt | 36a | Stützrolle |
| 12a | erster Transporteur | 38 | Ausgleichselement |
| 14 | zweiter Transportabschnitt | 38a | Ausgleichselement |
| 14a | zweiter Transporteur | 40 | Inspektionseinrichtung |
| 16 | Überführeinrichtung | 42 | Einlaufende |
| 16a | gekrümmte Transportstrecke | 44 | Leitblech |
| 18 | Behälter | 46 | Leitblech |
| 20 | Drehzylinder 20 | 50 | Stützeinrichtung |
| 22 | oberer Behälterstützring | 52 | Stellelement |
| 24 | unterer Behälterstützring | 54 | Riemenstützrolle |
| 25 | Lauffläche | 60 | umlaufender Transporteur |
| 26 | Riemenstützring | 62 | zusätzliche Behälter |
| 28 | Lager | 64 | Einschleusvorrichtung |
| 30 | Klemmriemen | 66 | Ausschleusvorrichtung |
| 30a | Klemmriemen | 70 | Führungseinrichtung |
| 32 | Umlenkrolle/Einlaufrolle | 72 | Führungsrolle |
| 34 | Umlenkrolle/Auslaufrolle | 72a | Führungsrolle |
| 33 | Umlenkrolle | 74 | Anstelleinrichtung |
| 33a | Umlenkrolle | 74a | Anstelleinrichtung |

## Patentansprüche

1. Transportvorrichtung (10) zum Transport von Behältern (18), umfassend:
einen ersten Transportabschnitt (12), der ausgebildet ist die Behälter (18) anzufördern,
einen zweiten Transportabschnitt (14), der ausgebildet ist die Behälter (18) abzufördern, und
eine Überführeinrichtung (16), umfassend
einen Drehzylinder (20),
einen Klemmriemen (30), und
eine Ausgleichseinrichtung,
wobei der Drehzylinder (20) und/oder der Klemmriemen (30) antreibbar ausgebildet sind, wobei die Ausgleichseinrichtung so ausgebildet ist, dass damit die Länge des Klemmriemens im Bereich der Überführeinrichtung eingestellt werden kann,
wobei der Drehzylinder (20) und der Klemmriemen (30) ausgebildet sind, die Behälter (18) zwischen dem Drehzylinder (20) und dem Klemmriemen (30) zu halten und dabei von dem ersten Transportabschnitt (12) auf den zweiten Transportabschnitt (14) zu überführen,
wobei der Drehzylinder (20)
mindestens ein Riemenstützelement (26; 50) aufweist, und
wobei das Riemenstützelement (26; 50) so angeordnet ist, dass der Klemmriemen (30) daran anliegt, wenn sich keine Behälter (18) auf der Überführeinrichtung (16) befinden, **dadurch gekennzeichnet, dass** der Drehzylinder einen oder mehrere Behälterstützringe (22, 24) aufweist.

2. Transportvorrichtung (10) nach Anspruch 1, wobei der Drehzylinder (20) und der Klemmriemen (30) antreibbar ausgebildet sind, und wobei der Drehzylinder (20) und der Klemmriemen (30) mit unterschiedlicher Geschwindigkeit antreibbar ausgebildet sind.

3. Transportvorrichtung (10) nach einem der vorherigen Ansprüche, wobei der Klemmriemen (30) um zwei Umlenkrollen (32, 34) verläuft.

4. Transportvorrichtung (10) nach einem der vorherigen Ansprüche, wobei beide Umlenkrollen (32, 34) mit voneinander unabhängigen Antrieben versehen sind.

5. Transportvorrichtung (10) nach einem der vorherigen Ansprüche, wobei beide Umlenkrollen (32, 34) mit voneinander unabhängigen Außenläufermotoren versehen sind.

6. Transportvorrichtung (10) nach einem der vorherigen Ansprüche, wobei das Riemenstützelement des Drehzylinders (20) mindestens einen frei drehbar gelagerten Riemenstützring (26) umfasst, und wobei der Riemenstützring (26) so angeordnet ist, dass der Klemmriemen (30) daran anliegt, wenn sich keine Behälter (18) auf der Überführeinrichtung (16) befinden.

7. Transportvorrichtung (10) nach einem der vorherigen Ansprüche, wobei das Riemenstützelement des Drehzylinders (20) eine oder mehrere ausfahrbare Stützeinrichtungen (50) aufweist, über die der Klemmriemen geführt wird, wenn sich keine Behälter (18) auf der Überführeinrichtung (16) befinden.

8. Transportvorrichtung (10) nach einem der vorherigen Ansprüche, wobei die Behälter (18) von dem ersten Transportabschnitt (12) zu dem zweiten Transportabschnitt (14) auf einer gekrümmten Transportstrecke (16a) gehalten werden und zumindest bereichsweise ausschließlich zwischen dem Klemmriemen (30) und dem Drehzylinder (20) gehalten werden.

9. Transportvorrichtung (10) nach einem der vorherigen Ansprüche, wobei unterhalb und/oder oberhalb der gekrümmten Transportstrecke (16a) zumindest eine Inspektionseinrichtung (40) zur Behälterinspektion angeordnet ist.

10. Transportvorrichtung (10) nach einem der vorherigen Ansprüche, wobei der erste Transportabschnitt (12) und der zweite Transportabschnitt (14) als durchgehendes Transportband (12a) ausgebildet sind, und die gekrümmte Transportstrecke (16a) ausgebildet ist, die Behälter (18) zwischen dem Klemmriemen (30) und dem Drehzylinder (20) schwebend gehalten von dem ersten Transportabschnitt (12) auf den zweiten Transportabschnitt (14) des Transportbands 12a zu überführen.

11. Verfahren zum Transport von Behältern (18), umfassend die Schritte:
• Anfördern der Behälter (18) auf einem ersten Transportabschnitt (12),
• Überführen der Behälter (18) mittels einer Überführeinrichtung (16) von dem ersten Transportabschnitt (12) auf einen zweiten Transportabschnitt (14),
• Abfördern der Behälter (18) auf dem zweiten Transportabschnitt (14),
wobei die Überführeinrichtung (16) einen Drehzylinder (20) und einen Klemmriemen (30) umfasst,
wobei der Drehzylinder (20) und/oder der Klemmriemen (30) antreibbar ausgebildet sind,
wobei die verfügbare Länge des Klemmriemens (30) im Bereich der Überführeinrichtung (16) mittels einer Ausgleichseinrichtung einstellbar ist,
wobei der Drehzylinder (20) und der Klemmriemen (30) ausgebildet sind, die Behälter (18) während dem Überführen zwischen dem Drehzylinder (20) und dem Klemmriemen (30) zu halten,
wobei der Drehzylinder (20)
mindestens ein Riemenstützelement (26; 52, 54) aufweist, und
wobei das Riemenstützelement (26; 52, 54) so angeordnet ist, dass der Klemmriemen (30) daran anliegt, wenn sich keine Behälter (18) auf der Überführeinrichtung (16) befinden, **dadurch gekennzeichnet, dass** der Drehzylinder einen oder mehrere Behälterstützringe (22, 24) aufweist.

12. Verfahren nach Anspruch 11, wobei der Klemmriemen (30) über zwei Umlenkrollen (32, 34) geführt wird und wobei beide Umlenkrollen (32, 34) mit voneinander unabhängigen Antrieben antreibbar ausgebildet sind.

13. Verfahren nach Anspruch 12, wobei die Länge des Vorlaufstrangs des Klemmriemens (30) auch über eine kurzzeitige Variation der Geschwindigkeit der Umlenkrollen (32, 34) eingestellt werden kann.

14. Verfahren nach einem der Ansprüche 11 bis 13, wobei die Geschwindigkeit des Klemmriemens (30) mittels einer elektronischen Steuerung an die Umfangsgeschwindigkeit des Drehzylinders angepasst wird.

## Claims

1. Transport device (10) for transporting containers (18), comprising:
a first transport section (12) which is configured to convey the containers (18) in,
a second transport section (14), which is configured to convey the containers (18) out, and
a transfer device (16) comprising
a rotary cylinder (20),
a clamping belt (30), and
a compensation device,
wherein the rotary cylinder (20) and/or the clamping belt (30) are configured to be drivable, wherein the compensation device is configured in such a way that the length of the clamping belt can be adjusted with it in the region of the transfer device,
wherein the rotary cylinder (20) and the clamping belt (30) are configured to hold the containers (18) between the rotary cylinder (20) and the clamping belt (30) while transferring them from the first transport section (12) to the second transport section (14),
wherein the rotary cylinder (20) comprises at least one belt support element (26; 50), and
wherein the belt support element (26; 50) is arranged such that the clamping belt (30) abuts against it when there are no containers (18) on the transfer device (16) **characterized in that** the rotary cylinder comprises one or more container support rings (22, 24).

2. Transport device (10) according to claim 1, wherein the rotary cylinder (20) and the clamping belt (30) are configured to be drivable, and wherein the rotary cylinder (20) and the clamping belt (30) are configured to be drivable at different speeds.

3. Transport device (10) according to one of the previous claims, wherein the clamping belt (30) runs around two deflection rollers (32, 34).

4. Transport device (10) according to one of the previous claims, wherein both deflection rollers (32, 34) are provided with drives being independent of each other.

5. Transport device (10) according to one of the previous claims, whereby both deflection rollers (32, 34) are provided with external rotor motors which are independent of each other.

6. Transport device (10) according to one of the previous claims, wherein the belt support element of the rotary cylinder (20) comprises at least one freely rotatably mounted belt support ring (26), and wherein the belt support ring (26) is arranged such that the clamping belt (30) abuts against it when there are no containers (18) on the transfer device (16).

7. Transport device (10) according to one of the previous claims, wherein the belt support element of the rotary cylinder (20) comprises one or more extendable support devices (50) over which the clamping belt is guided when there are no containers (18) on the transfer device (16).

8. Transport device (10) according to one of the previous claims, wherein the containers (18) are held from the first transport section (12) to the second transport section (14) on a curved transport section (16a) and are held at least in some areas exclusively between the clamping belt (30) and the rotary cylinder (20).

9. Transport device (10) according to one of the previous claims, wherein at least one inspection device (40) for container inspection is arranged below and/or above the curved transport section (16a).

10. Transport device (10) according to one of the previous claims, wherein the first transport section (12) and the second transport section (14) are configured as a continuous transport belt (12a), and the curved transport section (16a) is configured to transfer the containers (18) kept suspended between the clamping belt (30) and the rotary cylinder (20) from the first transport section (12) to the second transport section (14) of the transport belt 12a.

11. Method for transporting containers (18) comprising the steps of:
- conveying the containers (18) in on a first transport section (12),
- transferring the containers (18) by means of a transfer device (16) from the first transport section (12) to a second transport section (14),
- conveying the containers (18) out on the second transport section (14), wherein the transfer device (16) comprises a rotary cylinder (20) and a clamping belt (30),
wherein the rotary cylinder (20) and/or the clamping belt (30) are configured to be drivable,
wherein the available length of the clamping belt (30) is adjustable in the region of the transfer device (16) by means of a compensation device,
wherein the rotary cylinder (20) and the clamping belt (30) are configured to hold the containers (18) between the rotary cylinder (20) and the clamping belt (30) during the transfer,
wherein the rotary cylinder (20) comprises at least one belt support element (26; 52, 54), and
wherein the belt support element (26; 52, 54) is arranged such that the clamping belt (30) abuts against it when no containers (18) are on the transfer device (16) **characterized in that** the rotary cylinder (20) comprises one or more container support rings (22, 24).

12. Method according to claim 11, wherein the clamping belt (30) is guided over two deflection rollers (32, 34) and wherein both deflection rollers (32, 34) are configured to be drivable with drives being independent of one another.

13. Method according to claim 12, whereby the length of the leading strand of the clamping belt (30) can also be adjusted by briefly varying the speed of the deflection rollers (32, 34).

14. Method according to one of claims 11 to 13, whereby the speed of the clamping belt (30) is adapted to the circumferential speed of the rotary cylinder by means of an electronic control.

## Revendications

1. Dispositif de transport (10) pour transporter des contenants (18), comprenant :
une première section de transport (12), qui est formée de façon à amener les contenants (18),
une deuxième section de transport (14), qui est formée de façon à évacuer les contenants (18), et
un dispositif de transfert (16) comprenant
un cylindre rotatif (20),
une courroie de serrage (30), et
un dispositif de compensation,
dans lequel le cylindre rotatif (20) et/ou la courroie de serrage (30) sont formés de façon à pouvoir être entraînés, dans lequel le dispositif de compensation est formé de telle sorte que la longueur de la courroie de serrage puisse être ajustée à l'aide de celui-ci dans la zone du dispositif de transfert,
dans lequel le cylindre rotatif (20) et la courroie de serrage (30) sont formés de façon à maintenir les contenants (18) entre le cylindre rotatif (20) et la courroie de serrage (30) et lors de ce processus à les transférer à partir de la première section de transport (12) jusqu'à la deuxième section de transport (14),
dans lequel le cylindre rotatif (20) a au moins un élément de support de courroie (26 ; 50), et
dans lequel l'élément de support de courroie (26 ; 50) est agencé de telle sorte que la courroie de serrage (30) s'appuie contre celui-ci lorsqu'aucun contenant (18) ne se trouve sur le dispositif de transfert (16), caractérisé en que le cylindre rotatif a un ou
plusieurs anneaux de support de contenant (22, 24).

2. Dispositif de transport (10) selon la revendication 1, dans lequel le cylindre rotatif (20) et la courroie de serrage (30) sont formés de façon à pouvoir être entraînés, et dans lequel le cylindre rotatif (20) et la courroie de serrage (30) sont formés de façon à pouvoir être entraînés à des vitesses différentes.

3. Dispositif de transport (10) selon l'une des revendications précédentes, dans lequel la courroie de serrage (30) passe autour de deux rouleaux de déflexion (32, 34).

4. Dispositif de transport (10) selon l'une des revendications précédentes, dans lequel les deux rouleaux de déflexion (32, 34) sont pourvus d'organes d'entraînement qui sont indépendants l'un de l'autre.

5. Dispositif de transport (10) selon l'une des revendications précédentes, dans lequel les deux rouleaux de déflexion (32, 34) sont pourvus de moteurs à rotor externes qui sont indépendants l'un de l'autre.

6. Dispositif de transport (10) selon l'une des revendications précédentes, dans lequel l'élément de support de courroie du cylindre rotatif (20) comprend au moins un anneau de support de courroie (26) monté en rotation libre, et dans lequel l'anneau de support de courroie (26) est agencé de telle sorte que la courroie de serrage (30) s'appuie contre celui-ci lorsqu'aucun contenant (18) ne se trouve sur le dispositif de transfert (16).

7. Dispositif de transport (10) selon l'une des revendications précédentes, dans lequel l'élément de support de courroie du cylindre rotatif (20) a un ou plusieurs dispositifs de support extensibles (50), sur lesquels la courroie de serrage est guidée lorsqu'aucun contenant (18) ne se trouve sur le dispositif de transfert (16).

8. Dispositif de transport (10) selon l'une des revendications précédentes, dans lequel les contenants (18) sont maintenus sur une section de transport incurvée (16a) à partir de la première section de transport (12) jusqu'à la deuxième section de transport (14) et sont au moins maintenus exclusivement dans des zones entre la courroie de serrage (30) et le cylindre rotatif (20).

9. Dispositif de transport (10) selon l'une des revendications précédentes, dans lequel au moins un dispositif d'inspection (40) servant à l'inspection de contenants est agencé au-dessous et/ou au-dessus de la section de transport incurvée (16a).

10. Dispositif de transport (10) selon l'une des revendications précédentes, dans lequel la première section de transport (12) et la deuxième section de transport (14) sont formées en tant que bande de transport continue (12a), et la section de transport incurvée (16a) est formée de façon à transférer les contenants (18) maintenus de manière flottante entre la courroie de serrage (30) et le cylindre rotatif (20) à partir de la première section de transport (12) jusqu'à la deuxième section de transport (14) de la bande de transport 12a.

11. Procédé pour transporter des contenants (18), comprenant les étapes :
• d'amenée des contenants (18) sur une première section de transport (12),
• de transfert des contenants (18) au moyen d'un dispositif de transfert (16) à partir de la première section de transport (12) jusqu'à une deuxième section de transport (14),
• d'évacuation des contenants (18) sur la deuxième section de transport (14),
dans lequel le dispositif de transfert (16) comprend un cylindre rotatif (20) et une courroie de serrage (30),
dans lequel le cylindre rotatif (20) et/ou la courroie de serrage (30) sont formés de façon à pouvoir être entraînés,
dans lequel la longueur disponible de la courroie de serrage (30) est ajustable dans la zone du dispositif de transfert (16) au moyen d'un dispositif de compensation,
dans lequel le cylindre rotatif (20) et la courroie de serrage (30) sont formés de façon à maintenir les contenants (18) entre le cylindre rotatif (20) et la courroie de serrage (30) durant le transfert,
dans lequel le cylindre rotatif (20) a au moins un élément de support de courroie (26 ; 52, 54), et
dans lequel l'élément de support de courroie (26 ; 52, 54) est agencé de telle sorte que la courroie de serrage (30) s'appuie contre celui-ci lorsqu'aucun contenant (18) ne se trouve sur le dispositif de transfert (16), caractérisé en que le cylindre rotatif a un ou plusieurs anneaux de support de contenant (22, 24).

12. Procédé selon la revendication 11, dans lequel la courroie de serrage (30) est guidée par-dessus deux rouleaux de déflexion (32, 34) et dans lequel les deux rouleaux de déflexion (32, 34) sont formés de façon à pouvoir être entraînés par des organes d'entraînement qui sont indépendants l'un de l'autre.

13. Procédé selon la revendication 12, dans lequel la longueur du tronçon avant de la courroie de serrage (30) peut aussi être ajustée par l'intermédiaire d'une variation de courte durée de la vitesse des rouleaux de déflexion (32, 34).

14. Procédé selon l'une des revendications 11 à 13, dans lequel la vitesse de la courroie de serrage (30) est adaptée à la vitesse circonférentielle du cylindre rotatif au moyen d'une commande électronique.
